# EUROPEAN PATENT APPLICATION

(11) **EP 4 701 113 A1**
(43) Date of publication of application: **25.02.2026**
(21) Application number: 24791932.7
(22) Date of filing: 12.04.2024
(51) Int. Cl.: H04L 5/00

(54) **METHOD AND APPARATUS USED IN COMMUNICATION NODE FOR WIRELESS COMMUNICATION**

(30) Priority: 18.04.2023 CN 202310417958
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/087445
(87) International publication number: WO 2024/217347

(57) **Abstract**

Disclosed in the present application are a method and apparatus used in a communication node for wireless communication. The method comprises: a communication node receiving first signaling and receiving first DCI, wherein the first DCI is identified by a C-RNTI of a first node in a first cell, the first DCI comprises a first bit block and a second bit block, the first bit block comprises at least one bit, the second bit block comprises at least one bit, and any bit comprised in the second bit block does not belong to the first bit block; and in response to the reception of the first DCI, sending a first preamble on a first air interface resource, wherein the first signaling is used for determining whether the second bit block indicates a cell associated with the first preamble, the interpretation of the first bit block depends on whether the cell associated with the first preamble comprises the first cell, and when the cell associated with the first preamble comprises the first cell, the first bit block is used for determining the first air interface resource. The solution provided in the present application reduces the occupation of a DCI reserved field.

## Description

### Technical Field

The present application relates to a transmission method and apparatus used in a wireless communication system, in particular to a transmission method and apparatus for mobility.

### Background Art

With the continuous development of wireless communication, the requirements for mobility are becoming increasingly high, for example, shorter interruption delays. The 3GPP (3rd Generation Partner Project) RAN (Radio Access Network) #94e meeting decided to study L1 (Layer 1)/L2 (Layer 2) Triggered Mobility (LTM) in a work item (WI) "Further NR (New Radio) mobility enhancements".

### Summary of the Invention

In the prior art, when one piece of DCI (Downlink Control Information) identified by a C (Cell)-RNTI (Radio Network Temporary Identifier) of one cell is received by user equipment (UE), and in response to the reception of this DCI, when one Preamble is sent, one bit block in this DCI indicates an air interface resource occupied by this Preamble, and a cell associated with this Preamble comprises this cell. However, when one piece of DCI identified by a C-RNTI of one cell is received by the UE, and in response to the reception of this DCI, when one Preamble is sent, if the cell associated with this Preamble does not comprise this cell, how does this DCI determine whether the cell associated with this Preamble comprises this cell and how to determine that the air interface resource occupied by this Preamble needs enhancements.

In view of the above problem, the present application provides a solution for mobility. In the description for the above problem, an NR system is used as one example. The present application is also applicable to scenarios such as an LTE (Long-Term Evolution) system to achieve technical effects similar to those of the NR system; and further, although the present application provides a specific implementation for the LTM, the present application can also be used in scenarios such as PSCell changes to achieve technical effects similar to those of the LTM. Further, although the original intention of the present application is for a Uu air interface, the present application can also be used for a PC5 interface to achieve technical effects similar to those of the Uu air interface. Further, although the original intention of the present application is for terminal and base station scenarios, the present application is also applicable to a V2X (Vehicleto-Everything) scenario, as well as communication scenarios between terminals and relays and between relays and base stations to achieve technical effects similar to those in the terminal and base station scenarios. Further, although the original intention of the present application is for terminal and base station scenarios, the present application is also applicable to a communication scenario of an IAB (Integrated Access and Backhaul) to achieve technical effects similar to those in the terminal and base station scenarios. Further, although the original intention of the present application is for terrestrial network (TN) scenarios, the present application is also applicable to communication scenarios of non-terrestrial networks (NTNs) to achieve technical effects similar to those in the TN scenarios. In addition, the use of a unified solution for different scenarios also helps to reduce hardware complexity and costs.

As one embodiment, interpretations of terminologies in the present application refer to the definitions in the specification protocol TS36 series of 3GPP.

As one embodiment, the interpretations of the terminologies in the present application refer to the definitions in the specification protocol TS38 series of 3GPP.

As one embodiment, the interpretations of the terminologies in the present application refer to the definitions in the specification protocol TS37 series of 3GPP.

As one embodiment, the interpretations of the terminologies in the present application refer to the definitions in the specification protocol of IEEE (Institute of Electrical and Electronics Engineers).

It should be noted that, in the absence of conflict, embodiments and features in the embodiments in any node of the present application can be applied to any other node. In the absence of conflict, the embodiments and the features in the embodiments of the present application can be arbitrarily combined with each other.

The present application discloses a method used in a first node for wireless communication, characterized by comprising:
receiving first signaling and receiving first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and
in response to the reception of the first DCI, sending a first Preamble on a first air interface resource,
wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the problem to be solved by the present application comprises: how to determine whether the second bit block indicates the cell associated with the first Preamble.

As one embodiment, the problem to be solved by the present application comprises: how to determine whether the second bit block indicates the cell associated with the first Preamble.

As one embodiment, the problem to be solved by the present application comprises: how to interpret the first bit block.

As one embodiment, the problem to be solved by the present application comprises: how to determine whether the cell associated with the first Preamble comprises the first cell.

As one embodiment, the characteristics of the above method comprise: the interpretation of the first bit block depends on whether the cell associated with the first Preamble comprises the first cell.

As one embodiment, the characteristics of the above method comprise: when the cell associated with the first Preamble comprises the first cell, the first bit block is used for determining the first air interface resource.

As one embodiment, the characteristics of the above method comprise: when the cell associated with the first Preamble does not comprises the first cell, the first bit block is reinterpreted.

As one embodiment, the benefits of the above method comprise: reusing an existing DCI field to reduce protocol impacts.

As one embodiment, the benefits of the above method comprise: reducing the occupation of a DCI reserved field.

According to one aspect of the present application, it is characterized by comprising:
receiving a first RRC (Radio Resource Control) message, the first RRC message being used for configuring at least one Preamble and at least one reference signal resource of a second cell, and the at least one Preamble being associated with the at least one reference signal resource,
wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

According to one aspect of the present application, it is characterized in that the first reference signal resource is one reference signal resource having the highest RSRP among the at least one reference signal resource.

As one embodiment, the problem to be solved by the present application comprises: how to determine an air interface resource occupied by the first Preamble.

As one embodiment, the benefits of the above method comprise: improving the success probability of random access.

According to one aspect of the present application, it is characterized in that the first reference signal resource is any reference signal resource among the at least one reference signal resource.

As one embodiment, the problem to be solved by the present application comprises: how to determine an air interface resource occupied by the first Preamble.

As one embodiment, the benefits of the above method comprise: improving the success probability of random access.

According to one aspect of the present application, it is characterized in that when the cell associated with the first Preamble does not comprise the first cell, the first bit block indicates a first index; the first index indicates at least the former of the first reference signal resource and the first Preamble; and the first RRC message is used for determining the first index.

As one embodiment, the problem to be solved by the present application comprises: how to determine an air interface resource occupied by the first Preamble.

As one embodiment, the benefits of the present application comprise: reinterpreting the first bit block to reduce the occupation of a DCI field.

As one embodiment, the benefits of the present application comprise: facilitating the backward compatibility.

According to one aspect of the present application, it is characterized in that when the cell associated with the first Preamble does not comprise the first cell, the first bit block is used for determining at least one of sending power of the first Preamble or whether to monitor a response to the first Preamble.

As one embodiment, the benefits of the present application comprise: reinterpreting the first bit block to reduce the occupation of a DCI field.

As one embodiment, the benefits of the present application comprise: facilitating the backward compatibility.

According to one aspect of the present application, it is characterized in that when the cell associated with the first Preamble does not comprise the first cell, the first bit block is reserved.

As one embodiment, the benefits of the present application comprise: reinterpreting the first bit block to reduce the occupation of a DCI field.

As one embodiment, the benefits of the present application comprise: avoiding occupying the reserved field.

As one embodiment, the benefits of the present application comprise: facilitating the backward compatibility.

The present application discloses a method used in a second node for wireless communication, characterized by comprising:
sending first signaling and sending first DCI, wherein the first DCI is identified by a C-RNTI of a recipient of the first DCI in a first cell, the first DCI comprises a first bit block and a second bit block, the first bit block comprises at least one bit, the second bit block comprises at least one bit, and any bit comprised in the second bit block does not belong to the first bit block,
wherein in response to the reception of the first DCI by the recipient of the first DCI, a first Preamble is sent by the recipient of the first DCI on a first air interface resource; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

According to one aspect of the present application, it is characterized by comprising:
sending a first RRC message, the first RRC message being used for configuring at least one Preamble and at least one reference signal resource of a second cell, and the at least one Preamble being associated with the at least one reference signal resource,
wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

According to one aspect of the present application, it is characterized in that the first reference signal resource is one reference signal resource having the highest RSRP among the at least one reference signal resource.

According to one aspect of the present application, it is characterized in that the first reference signal resource is any reference signal resource among the at least one reference signal resource.

According to one aspect of the present application, it is characterized in that when the cell associated with the first Preamble does not comprise the first cell, the first bit block indicates a first index; the first index indicates at least the former of the first reference signal resource and the first Preamble; and the first RRC message is used for determining the first index.

According to one aspect of the present application, it is characterized in that when the cell associated with the first Preamble does not comprise the first cell, the first bit block is used for determining at least one of sending power of the first Preamble or whether to monitor a response to the first Preamble.

According to one aspect of the present application, it is characterized in that when the cell associated with the first Preamble does not comprise the first cell, the first bit block is reserved.

The present application discloses a method used in a third node for wireless communication, characterized by comprising:
receiving a first Preamble on a first air interface resource,
wherein first signaling is received by a sender of the first Preamble and first DCI is received by the sender of the first Preamble, the first DCI is identified by a C-RNTI of the sender of the first Preamble in a first cell, the first DCI comprises a first bit block and a second bit block, the first bit block comprises at least one bit, the second bit block comprises at least one bit, and any bit comprised in the second bit block does not belong to the first bit block; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

According to one aspect of the present application, it is characterized in that a first RRC message is received by the sender of the first Preamble, the first RRC message being used for configuring at least one Preamble and at least one reference signal resource of a second cell, and the at least one Preamble being associated with the at least one reference signal resource, wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

According to one aspect of the present application, it is characterized in that the first reference signal resource is one reference signal resource having the highest RSRP among the at least one reference signal resource.

According to one aspect of the present application, it is characterized in that the first reference signal resource is any reference signal resource among the at least one reference signal resource.

According to one aspect of the present application, it is characterized in that when the cell associated with the first Preamble does not comprise the first cell, the first bit block indicates a first index; the first index indicates at least the former of the first reference signal resource and the first Preamble; and the first RRC message is used for determining the first index.

According to one aspect of the present application, it is characterized in that when the cell associated with the first Preamble does not comprise the first cell, the first bit block is used for determining at least one of sending power of the first Preamble or whether to monitor a response to the first Preamble.

According to one aspect of the present application, it is characterized in that when the cell associated with the first Preamble does not comprise the first cell, the first bit block is reserved.

The present application discloses a first node for wireless communication, characterized by comprising:
a first receiver receiving first signaling and receiving first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and
a first transmitter, in response to the reception of the first DCI, sending a first Preamble on a first air interface resource,
wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

The present application discloses a second node for wireless communication, characterized by comprising:
a second transmitter sending first signaling and sending first DCI, wherein the first DCI is identified by a C-RNTI of a recipient of the first DCI in a first cell, the first DCI comprises a first bit block and a second bit block, the first bit block comprises at least one bit, the second bit block comprises at least one bit, and any bit comprised in the second bit block does not belong to the first bit block,
wherein in response to the reception of the first DCI by the recipient of the first DCI, a first Preamble is sent by the recipient of the first DCI on a first air interface resource; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

The present application discloses a third node for wireless communication, characterized by comprising:
a third receiver receiving a first Preamble on a first air interface resource,
wherein first signaling is received by a sender of the first Preamble and first DCI is received by the sender of the first Preamble, the first DCI is identified by a C-RNTI of the sender of the first Preamble in a first cell, the first DCI comprises a first bit block and a second bit block, the first bit block comprises at least one bit, the second bit block comprises at least one bit, and any bit comprised in the second bit block does not belong to the first bit block; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, compared with the traditional solution, the present application has the following advantages:
-. reducing the occupation of a DCI reserved field;
-. reusing an existing DCI field to reduce protocol impacts;
-. improving the success probability of random access;
-. reinterpreting the first bit block to reduce the occupation of a DCI field;
-. avoiding occupying the reserved field; and
-. facilitating the backward compatibility.

### Brief Description of the Drawings

Other features, purposes and advantages of the present application will become more apparent from reading the detailed description of the non-limiting embodiments made with reference to the following drawings:
FIG. 1 shows a flowchart of transmission of first signaling, first DCI and a first Preamble according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of wireless signal transmission according to another embodiment of the present application;
FIG. 7 shows a schematic diagram of a first reference signal resource being one reference signal resource having the highest RSRP among at least one reference signal resource according to one embodiment of the present application;
FIG. 8 shows a schematic diagram of a first reference signal resource being any reference signal resource among at least one reference signal resource according to one embodiment of the present application;
FIG. 9 shows a schematic diagram of a first bit block indicating a first index according to one embodiment of the present application;
FIG. 10 shows a schematic diagram of a first bit block being used for determining at least one of sending power of a first Preamble or whether to monitor a response to the first Preamble according to one embodiment of the present application;
FIG. 11 shows a schematic diagram of a first bit block being reserved according to one embodiment of the present application;
FIG. 12 shows a structural block diagram of a processing apparatus used in a first node according to one embodiment of the present application;
FIG. 13 shows a structural block diagram of a processing apparatus used in a second node according to one embodiment of the present application; and
FIG. 14 shows a structural block diagram of a processing apparatus used in a third node according to one embodiment of the present application.

### Detailed Description of Embodiments

The technical solution of the present application will be further described in detail below in conjunction with the drawings. It should be noted that, in the absence of conflict, embodiments and features in the embodiments in the present application may be arbitrarily combined with each other.

### Embodiment 1

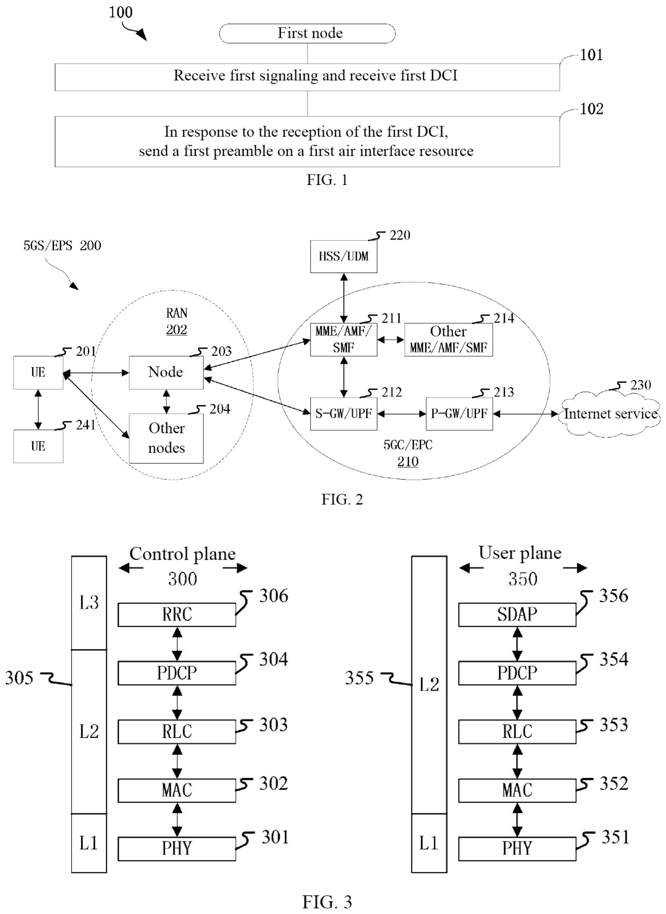

Embodiment 1 illustrates a flowchart of transmission of first signaling, first DCI, and a first Preamble according to one embodiment of the present application, as shown in FIG. 1. In FIG. 1, each block represents one step. It is particularly emphasized that the order of the blocks in the figure does not represent the temporal relationship between the steps represented.

In Embodiment 1, in step 101, a first node in the present application receives the first signaling and receives the first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and in step 102, in response to the reception of the first DCI, sends the first Preamble on a first air interface resource, wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, a receiving moment of the first signaling is earlier than a receiving moment of the first DCI.

As one embodiment, the receiving moment of the first signaling is not later than the receiving moment of the first DCI.

As one embodiment, the receiving moment of the first signaling is the same as the receiving moment of the first DCI.

As one embodiment, the first signaling is one piece of UE specific signaling.

As one embodiment, the first signaling is one piece of unicast signaling.

As one embodiment, the first signaling is signaling of one RRC sublayer.

As one sub-embodiment of this embodiment, the first signaling is transmitted by a DCCH (Dedicated Control Channel).

As one sub-embodiment of this embodiment, the first signaling is transmitted by an SRB1 (Signaling radio bearer 1).

As one sub-embodiment of this embodiment, the first signaling is transmitted by an SRB3 (Signaling radio bearer 3).

As one sub-embodiment of this embodiment, the first signaling is one RRC message.

As one sub-embodiment of this embodiment, the first signaling is one RRC IE (Information Element).

As one sub-embodiment of this embodiment, the first signaling is one RRC field.

As one sub-embodiment of this embodiment, the first signaling is a first RRC message.

As one sub-embodiment of this embodiment, the first signaling is one field in the first RRC message.

As one sub-embodiment of this embodiment, the first signaling is one IE in the first RRC message.

As one sub-embodiment of this embodiment, the first signaling does not belong to the first RRC message.

As one sub-embodiment of this embodiment, the first signaling is not the first RRC message.

As one embodiment, the first signaling is signaling of one MAC sublayer.

As one sub-embodiment of this embodiment, the first signaling is one MAC PDU (Protocol Data Unit).

As one sub-embodiment of this embodiment, the first signaling is one MAC subPDU.

As one sub-embodiment of this embodiment, the first signaling is one MAC CE (Control Element).

As one sub-embodiment of this embodiment, the first signaling is one MAC subheader.

As one sub-embodiment of this embodiment, the first signaling is one MAC field.

As one embodiment, the first signaling is signaling of one physical layer.

As one sub-embodiment of this embodiment, the first signaling is identified by one C-RNTI of the first node.

As one sub-embodiment of this embodiment, the first signaling is one piece of DCI.

As one sub-embodiment of this embodiment, the first signaling is one DCI field.

As one sub-embodiment of this embodiment, the first signaling is one field in the first DCI.

As one sub-embodiment of this embodiment, the first signaling is at least one bit in the first DCI.

As one sub-embodiment of this embodiment, the first signaling is not the first DCI.

As one sub-embodiment of this embodiment, the first signaling does not belong to the first DCI.

As one sub-embodiment of this embodiment, the first signaling belongs to the first DCI.

As one sub-embodiment of this embodiment, the first signaling occupies at least one bit in the first DCI.

As one sub-embodiment of this embodiment, the first signaling is one field in the first DCI.

As one sub-embodiment of this embodiment, the first signaling is at least one bit other than the first bit block in the first DCI.

As one sub-embodiment of this embodiment, the first signaling is at least one bit other than the first bit block and the second bit block in the first DCI.

As one embodiment, the first cell is one SpCell (Special Cell) of the first node.

As one embodiment, when the first DCI is received, the first cell is one SpCell of the first node.

As one embodiment, when the first DCI is received, the cell associated with the first Preamble is one candidate SpCell of the first cell.

As one embodiment, the first cell is one candidate SpCell.

As one sub-embodiment of this embodiment, the candidate SpCell is a candidate SpCell for LTM.

As one sub-embodiment of this embodiment, the candidate SpCell comprises a candidate SpCell for LTM.

As one sub-embodiment of this embodiment, the candidate SpCell comprises a candidate SpCell for CHO (Conditional Handover).

As one sub-embodiment of this embodiment, the candidate SpCell can be used for a DCI indication of a PDCCH order.

As one sub-embodiment of this embodiment, the candidate SpCell cannot be used for a DCI indication of a PDCCH order.

As one sub-embodiment of this embodiment, the candidate SpCell is assigned with a candidate configuration index.

As one sub-embodiment of this embodiment, the candidate SpCell is a cell that can become an SpCell.

As one sub-embodiment of this embodiment, the candidate SpCell is a cell waiting to become an SpCell.

As one sub-embodiment of this embodiment, the candidate SpCell is a cell that can be indicated as an SpCell.

As one embodiment, the one SpCell is a PCell (Primary Cell).

As one embodiment, the one SpCell is a PSCell (Primary SCG (Secondary Cell Group) Cell).

As one embodiment, the first DCI is one piece of physical layer transmission.

As one embodiment, the first DCI is one piece of PDCCH (Physical Downlink Control Channel) transmission.

As one embodiment, the first DCI is transmitted on a PDCCH.

As one embodiment, the first DCI is received on the first cell.

As one embodiment, a format of the first DCI is a DL (Downlink) DCI format.

As one embodiment, a format of the first DCI is Format 1_0.

As one embodiment, the first DCI comprises one Identifier for DCI formats field, and the one Identifier for DCI formats field is set to 1.

As one embodiment, the first DCI comprises one Frequency domain resource assignment field, and the one Frequency domain resource assignment field is set to all 1.

As one embodiment, the first DCI comprises one Identifier for DCI formats field, and the one Identifier for DCI formats field is set to 1; and the first DCI comprises one Frequency domain resource assignment field, and the one Frequency domain resource assignment field is set to all 1.

As one embodiment, the phrase "the first DCI is identified by a C-RNTI of the first node in a first cell" refers to: the first DCI is scrambled by the C-RNTI of the first node in the first cell.

As one embodiment, the phrase "the first DCI is identified by a C-RNTI of the first node in a first cell" refers to: a CRC of the first DCI is scrambled by the C-RNTI of the first node in the first cell.

As one embodiment, the phrase "the first DCI is identified by a C-RNTI of the first node in a first cell" refers to: the first DCI is addressed to the C-RNTI of the first node in the first cell.

As one embodiment, the phrase "the first DCI is identified by a C-RNTI of the first node in a first cell" refers to: the first DCI comprises the C-RNTI of the first node in the first cell.

As one embodiment, the C-RNTI of the first node in the first cell refers to: a C-RNTI of the first node in a cell group to which the first cell belongs.

As one embodiment, the C-RNTI of the first node in the first cell refers to: a C-RNTI of the first node in an MAC entity corresponding to a cell group to which the first cell belongs.

As one embodiment, the second bit block and the first bit block do not overlap.

As one embodiment, any bit comprised in the second bit block is different from any bit comprised in the first bit block.

As one embodiment, a position of any bit comprised in the second bit block in the first DCI is different from a position of any bit comprised in the first bit block in the first DCI.

As one embodiment, the first bit block is a positive integer number of bits.

As one embodiment, the first bit block is at least one bit.

As one embodiment, the first bit block is one bit.

As one embodiment, the first bit block is multiple bits.

As one embodiment, the first bit block is at least one bit other than the second bit block in the first DCI.

As one embodiment, the first bit block is consecutive.

As one embodiment, there does not exist one bit other than the first bit block between any two bits in the first bit block.

As one embodiment, the first bit block is non-consecutive.

As one embodiment, there exist two bits in the first bit block, and there exists at least one bit other than the first bit block between the two bits.

As one embodiment, the first bit block occupies at least one field in the first DCI.

As one embodiment, the first bit block occupies only one field in the first DCI.

As one embodiment, the first bit block occupies multiple fields in the first DCI.

As one embodiment, the first bit block is a Random Access Preamble index field in the first DCI.

As one embodiment, the first bit block is a UL (Uplink)/SUL (Supplementary Uplink) indicator field in the first DCI.

As one embodiment, the first bit block is an SS/PBCH index field in the first DCI.

As one embodiment, the first bit block is a PRACH (Physical Random Access Channel) Mask index field in the first DCI.

As one embodiment, the first bit block occupies at least one field among the Random Access Preamble index field, the UL/SUL indicator field, the SS/PBCH index field, and the PRACH Mask index field in the first DCI.

As one embodiment, the first bit block is at least one field among the Random Access Preamble index field, the UL/SUL indicator field, the SS/PBCH index field, and the PRACH Mask index field in the first DCI.

As one embodiment, the second bit block is at least one field in the first DCI.

As one embodiment, the second bit block is one field in the first DCI.

As one embodiment, the second bit block is any bit block other than the first bit block in the first DCI.

As one embodiment, the second bit block occupies a positive integer number of bits.

As one embodiment, the second bit block occupies at least one bit.

As one embodiment, the second bit block occupies 2 bits.

As one embodiment, the second bit block occupies 3 bits.

As one embodiment, the second bit block occupies 4 bits.

As one embodiment, the second bit block is consecutive.

As one embodiment, there does not exist one bit other than the first bit block between any two bits in the second bit block.

As one embodiment, the second bit block is the Random Access Preamble index field in the first DCI.

As one embodiment, the second bit block is the UL/SUL indicator field in the first DCI.

As one embodiment, the second bit block is the SS/PBCH index field in the first DCI.

As one embodiment, the second bit block is the PRACH Mask index field in the first DCI.

As one embodiment, the second bit block occupies at least one field among the Random Access Preamble index field, the UL/SUL indicator field, the SS/PBCH index field, and the PRACH Mask index field in the first DCI.

As one embodiment, the second bit block occupies at least one bit after the PRACH Mask index field in the first DCI.

As one embodiment, the second bit block occupies at least one reserved bit after the PRACH Mask index field in the first DCI.

As one embodiment, when the cell associated with the first Preamble comprises the first cell, the second bit block is reserved; and the second bit block occupies at least one bit after the PRACH Mask index field in the first DCI.

As one embodiment, when the cell associated with the first Preamble comprises the first cell, the second bit block is used for indicating at least one of the first Preamble, or an index of an SSB for determining an RACH occasion of the first Preamble, or an RACH occasion for the first Preamble that is associated with an SSB for determining an RACH occasion of the first Preamble, or an uplink carrier for sending the first Preamble; the second bit block occupies at least one field among the Random Access Preamble index field, the UL/SUL indicator field, the SS/PBCH index field, and the PRACH Mask index field in the first DCI; and the second bit block occupies at least one bit after the PRACH Mask index field in the first DCI.

As one embodiment, the SSB is an SS (Synchronization Signal)/PBCH (Physical broadcast channel).

As one embodiment, the SSB is a Synchronization Signal Block.

As one embodiment, when the cell associated with the first Preamble does not comprise the first cell, the second bit block is used for indicating the cell associated with the first Preamble.

As one embodiment, the second bit block is located before the first bit block.

As one embodiment, the second bit block is located after the first bit block.

As one embodiment, the second bit block is located between two bits in the first bit block.

As one embodiment, the first bit block is at least one bit in the Random Access Preamble index field, the UL/SUL indicator field, the SS/PBCH index field, and the PRACH Mask index field in the first DCI; and the second bit block is at least one bit other than the first bit block in the Random Access Preamble index field, the UL/SUL indicator field, the SS/PBCH index field, and the PRACH Mask index field in the first DCI.

As one embodiment, the first bit block is at least one bit in the Random Access Preamble index field, the UL/SUL indicator field, the SS/PBCH index field, and the PRACH Mask index field in the first DCI; and the second bit block is at least one bit other than the Random Access Preamble index field, the UL/SUL indicator field, the SS/PBCH index field, and the PRACH Mask index field in the first DCI.

As one embodiment, the first bit block is at least one bit in the Random Access Preamble index field, the UL/SUL indicator field, the SS/PBCH index field, and the PRACH Mask index field in the first DCI; and the second bit block is at least one bit after the PRACH Mask index field in the first DCI.

As one embodiment, a behavior of sending the first Preamble on the first air interface resource refers to: sending the first Preamble according to the first air interface resource.

As one embodiment, the behavior of sending the first Preamble on the first air interface resource refers to: sending the first Preamble at a PRACH occasion calculated according to the first air interface resource.

As one embodiment, the behavior of sending the first Preamble on the first air interface resource refers to: sending the first Preamble on a time domain resource and a frequency domain resource calculated according to the first air interface resource.

As one embodiment, the behavior of sending the first Preamble on the first air interface resource refers to: sending the first Preamble on a time domain resource calculated according to the first air interface resource.

As one embodiment, the behavior of sending the first Preamble on the first air interface resource refers to: sending the first Preamble on a frequency domain resource calculated according to the first air interface resource.

As one embodiment, in response to the reception of the first DCI, a physical layer of the first node sends one indication to a higher layer of the first node; in response to the reception of the one indication in an MAC sublayer of the first node, the MAC sublayer of the first node indicates a lower layer of the first node to send the first Preamble on the first air interface resource; the higher layer comprises the MAC sublayer; and the lower layer comprises the physical layer.

As one embodiment, in response to the reception of the first DCI, a physical layer of the first node sends one indication to a higher layer of the first node; in response to the reception of the one indication in an MAC sublayer of the first node, one procedure is initiated; the one procedure comprises sending the first Preamble on the first air interface resource; the higher layer comprises the MAC sublayer; and the lower layer comprises the physical layer.

As one embodiment, in response to the reception of the first DCI refers to: when the first DCI is received.

As one embodiment, in response to the reception of the first DCI refers to: at least after the first DCI is received.

As one embodiment, in response to the reception of the first DCI refers to: at least within a given time interval after the first DCI is received.

As one embodiment, in response to the reception of the first DCI refers to: if the first DCI is received.

As one embodiment, the one procedure is one random access procedure.

As one embodiment, the one procedure is not a random access procedure.

As one embodiment, the one procedure is one procedure equivalent to a random access procedure.

As one embodiment, the first DCI triggers sending of the first Preamble.

As one embodiment, the first air interface resource is configured to a PRACH.

As one embodiment, the first air interface resource is used for a PRACH.

As one embodiment, the first air interface resource comprises at least one of a time domain resource and a frequency domain resource.

As one embodiment, the first air interface resource comprises the first Preamble.

As one embodiment, the first air interface resource comprises an uplink carrier for sending the first Preamble.

As one embodiment, the first air interface resource comprises an SSB for determining an RACH occasion of the first Preamble.

As one embodiment, the first air interface resource comprises an RACH occasion for the first Preamble that is associated with an SSB indicated by the one SS/PBCH index field.

As one embodiment, the first Preamble is one piece of PRACH transmission.

As one embodiment, the first Preamble is transmitted on a PRACH.

As one embodiment, the first Preamble is transmitted on a PRACH.

As one embodiment, the first Preamble is one Preamble.

As one embodiment, the first Preamble is one Preamble repetition.

As one embodiment, the first Preamble is associated with at least one cell.

As one embodiment, the first Preamble is associated with only one cell.

As one embodiment, the first Preamble is associated with multiple cells.

As one embodiment, the cell associated with the first Preamble refers to: a cell to which the first Preamble belongs.

As one embodiment, the cell associated with the first Preamble refers to: a cell configuring the first Preamble.

As one embodiment, the cell associated with the first Preamble refers to: a cell configured with the first Preamble.

As one embodiment, the cell associated with the first Preamble refers to: a cell configured with an index of the first Preamble.

As one embodiment, the cell associated with the first Preamble refers to: a cell sending the first Preamble.

As one embodiment, the cell associated with the first Preamble refers to: a cell to which the first air interface resource belongs; and the first air interface resource is used for sending the first Preamble.

As one embodiment, the first signaling indicates whether the second bit block indicates the cell associated with the first Preamble.

As one embodiment, the first signaling explicitly indicates whether the second bit block indicates the cell associated with the first Preamble.

As one embodiment, the first signaling implicitly indicate whether the second bit block indicates the cell associated with the first Preamble.

As one embodiment, whether the first signaling comprises given configuration information is used for determining whether the second bit block indicates the cell associated with the first Preamble; and the first signaling is signaling of one RRC sublayer.

As one sub-embodiment of this embodiment, when the first signaling comprises the given configuration information, the second bit block indicates the cell associated with the first Preamble; and when the first signaling does not comprise the given configuration information, the second bit block does not indicate the cell associated with the first Preamble.

As one sub-embodiment of this embodiment, the given configuration information is configured to a second cell.

As one sub-embodiment of this embodiment, the given configuration information is configured to the cell associated with the first Preamble.

As one sub-embodiment of this embodiment, the given configuration information is RACH configuration information.

As one sub-embodiment of this embodiment, the given configuration information is candidate configuration information.

As one embodiment, whether the first signaling is set to a given value is used for determining whether the second bit block indicates the cell associated with the first Preamble; and the first signaling is signaling of one physical layer.

As one sub-embodiment of this embodiment, when the first signaling is set to a given value, the second bit block indicates the cell associated with the first Preamble; and when the first signaling is not set to the given value, the second bit block does not indicate the cell associated with the first Preamble.

As one sub-embodiment of this embodiment, the first signaling is the PRACH Mask index field in the first DCI.

As one subsidiary embodiment of this sub-embodiment, the given value is 1111.

As one subsidiary embodiment of this sub-embodiment, the given value is 1110.

As one subsidiary embodiment of this sub-embodiment, the given value is 1100.

As one subsidiary embodiment of this sub-embodiment, the given value is 1011.

As one subsidiary embodiment of this sub-embodiment, the given value is 1010.

As one sub-embodiment of this embodiment, the first signaling is one field after the PRACH Mask index field in the first DCI.

As one subsidiary embodiment of this sub-embodiment, the given value is 1.

As one subsidiary embodiment of this sub-embodiment, the given value is 0.

As one embodiment, the second bit block indicating/not indicating the cell associated with the first Preamble refers to: a value of the second bit block is indexed to/is not indexed to the cell associated with the first Preamble.

As one embodiment, the second bit block indicating/not indicating the cell associated with the first Preamble refers to: the second bit block indicates/does not indicate a first identifier of the cell associated with the first Preamble.

As one embodiment, the second bit block indicating/not indicating the cell associated with the first Preamble refers to: the second bit block is set to/is not set to the first identifier of the cell associated with the first Preamble.

As one embodiment, the second bit block indicates only one cell, and the cell associated with the first Preamble is the only one cell; and the second bit block indicates the cell associated with the first Preamble.

As one embodiment, the second bit block indicates at least one cell, and the cell associated with the first Preamble is any one of the at least one cell; and the second bit block indicates the cell associated with the first Preamble.

As one embodiment, the second bit block indicates multiple cells, and the cell associated with the first Preamble is any one of the multiple cells; and the second bit block indicates the cell associated with the first Preamble.

As one embodiment, the first identifier is one non-negative integer.

As one embodiment, the first identifier is one positive integer.

As one embodiment, the first identifier is one index.

As one embodiment, the first identifier is an index of one cell.

As one embodiment, the first identifier is an index of one entry in one list.

As one embodiment, the first identifier is one logic identifier.

As one embodiment, the first identifier is one physical identifier.

As one embodiment, the first identifier is one PCI (Physical Cell Identity).

As one embodiment, the first identifier is one serving cell identifier (ServCellIndex).

As one embodiment, the first identifier is an index of one secondary cell (SCellIndex).

As one embodiment, the first identifier is an index of one MCG (Master Cell Group).

As one embodiment, the first identifier is one candidate configuration identifier.

As one embodiment, the first identifier is an index of one candidate configuration in one candidate configuration list.

As one embodiment, the first identifier is one identifier configured by an RRC message.

As one embodiment, the meaning of the phrase "the interpretation of the first bit block depends on whether the cell associated with the first Preamble comprises the first cell" is: the interpretation of the first bit block when the cell associated with the first Preamble comprises the first cell is different when the interpretation of the first bit block when the cell associated with the first Preamble does not comprise the first cell.

As one embodiment, the meaning of the phrase "the interpretation of the first bit block depends on whether the cell associated with the first Preamble comprises the first cell" is: the interpretation of the first bit block is related to whether the cell associated with the first Preamble comprises the first cell.

As one embodiment, the meaning of the phrase "the interpretation of the first bit block depends on whether the cell associated with the first Preamble comprises the first cell" is: whether the cell associated with the first Preamble comprises the first cell is used for interpreting the first bit block.

As one embodiment, the interpretation of the first bit block refers to: the interpretation of a value of the first bit block.

As one embodiment, the interpretation of the first bit block refers to: the interpretation of a field corresponding to the first bit block.

As one embodiment, the interpretation of the first bit block refers to: information indicated by the first bit block.

As one embodiment, the interpretation of the first bit block refers to: information carried by the first bit block.

As one embodiment, the interpretation of the first bit block refers to: decoding of the first bit block.

As one embodiment, the interpretation of the first bit block refers to: a connotation of the first bit block.

As one embodiment, the interpretation of the first bit block refers to: a meaning of the first bit block.

As one embodiment, the cell associated with the first Preamble comprising/not comprising the first cell refers to: the first Preamble is/is not for the first cell.

As one embodiment, the cell associated with the first Preamble comprising/not comprising the first cell refers to: the first Preamble is/is not one Preamble configured to the first cell.

As one embodiment, the cell associated with the first Preamble comprising/not comprising the first cell refers to: the first Preamble is/is not received by a maintenance node of the first cell.

As one embodiment, the cell associated with the first Preamble comprising/not comprising the first cell refers to: the first Preamble is/is not sent on the first cell.

As one embodiment, the cell associated with the first Preamble comprising/not comprising the first cell refers to: sending of the first Preamble occurs/does not occur on the first cell.

As one embodiment, the cell associated with the first Preamble comprising/not comprising the first cell refers to: the first Preamble is associated with/is not associated with the first cell.

As one embodiment, the cell associated with the first Preamble comprising/not comprising the first cell refers to: the cell associated with the first Preamble is/is not the first cell.

As one embodiment, cells associated with the first Preamble comprising/not comprising the first cell refers to: the cells associated with the first Preamble are multiple cells, and the first cell is/is not one of the multiple cells.

As one embodiment, the second bit block indicates that the first cell is used for determining that the cell associated with the first Preamble comprises the first cell; and the second bit block indicates that a cell other than the first cell is used for determining that the cell associated with the first Preamble does not comprise the first cell.

As one embodiment, if the second bit block indicates the first cell, the cell associated with the first Preamble comprises the first cell; and if the second bit block indicates a cell other than the first cell, the cell associated with the first Preamble does not comprise the first cell.

As one embodiment, the second bit block does not indicate that the cell associated with the first Preamble is used for determining that the cell associated with the first Preamble comprises the first cell; and the second bit block indicates that the cell associated with the first Preamble is used for determining that the cell associated with the first Preamble does not comprise the first cell.

As one embodiment, if the second bit block does not indicate the cell associated with the first Preamble, the cell associated with the first Preamble comprises the first cell; and if the second bit block indicates the cell associated with the first Preamble, the cell associated with the first Preamble does not comprise the first cell.

As one embodiment, the cell associated with the first Preamble comprising the first cell refers to: the second bit block indicates that the cell associated with the first Preamble comprises the first cell; and the cell associated with the first Preamble not comprising the first cell refers to: the second bit block indicates that the cell associated with the first Preamble does not comprise the first cell.

As one embodiment, the second bit block indicates that the cell associated with the first Preamble is used for determining that the cell associated with the first Preamble does not comprise the first cell.

As one embodiment, the second bit block indicates the cell associated with the first Preamble and the cell associated with the first Preamble does not comprise the first cell.

As one embodiment, when the second bit block indicates the cell associated with the first Preamble, the cell associated with the first Preamble does not comprise the first cell.

As one embodiment, if the second bit block indicates the cell associated with the first Preamble, the cell associated with the first Preamble does not comprise the first cell.

As one embodiment, the second bit block does not indicate that the cell associated with the first Preamble is used for determining that the cell associated with the first Preamble comprises the first cell.

As one embodiment, the second bit block does not indicate the cell associated with the first Preamble and the cell associated with the first Preamble comprises the first cell.

As one embodiment, when the second bit block does not indicate the cell associated with the first Preamble, the cell associated with the first Preamble comprises the first cell.

As one embodiment, if the second bit block does not indicate the cell associated with the first Preamble, the cell associated with the first Preamble comprises the first cell.

As one embodiment, the phrase "the interpretation of the first bit block depends on whether the cell associated with the first Preamble comprises the first cell" may be replaced with: the interpretation of the first bit block depends on whether the second bit block indicates the cell associated with the first Preamble; the phrase "the cell associated with the first Preamble comprises the first cell" may be replaced with: the second bit block does not indicate the cell associated with the first Preamble; and the phrase "the cell associated with the first Preamble does not comprise the first cell" may be replaced with: the second bit block indicates the cell associated with the first Preamble.

As one embodiment, the first signaling is used for determining that the second bit block indicates the cell associated with the first Preamble, and the cell associated with the first Preamble does not comprise the first cell.

As one embodiment, the first signaling is used for determining that the second bit block does not indicate the cell associated with the first Preamble, and the cell associated with the first Preamble comprises the first cell.

As one embodiment, when the cell associated with the first Preamble comprises the first cell, the first DCI comprises one Random Access Preamble index field, one UL/SUL indicator field, one SS/PBCH index field, and one PRACH Mask index field.

As one sub-embodiment of this embodiment, the one Random Access Preamble index field indicates an index of the first Preamble; and the one Random Access Preamble index field is not set to all 0.

As one subsidiary embodiment of this sub-embodiment, the one UL/SUL indicator field indicates an uplink carrier for sending the first Preamble; and the first node is configured with supplementaryUplink on the first cell.

As one subsidiary embodiment of this sub-embodiment, the one UL/SUL indicator field is reserved; and the first node is not configured with supplementaryUplink on the first cell.

As one subsidiary embodiment of this sub-embodiment, the one SS/PBCH index field indicates an SSB for determining an RACH occasion of the first Preamble.

As one subsidiary embodiment of this sub-embodiment, the one PRACH Mask index field indicates an RACH occasion for the first Preamble that is associated with an SSB indicated by the one SS/PBCH index field.

As one sub-embodiment of this embodiment, the one Random Access Preamble index field is set to all 0.

As one subsidiary embodiment of this sub-embodiment, the one UL/SUL indicator field is reserved.

As one subsidiary embodiment of this sub-embodiment, the one SS/PBCH index field is reserved.

As one subsidiary embodiment of this sub-embodiment, the one PRACH Mask index field is reserved.

As one embodiment, when the cell associated with the first Preamble comprises the first cell, any bit in the first bit block is not reserved.

As one embodiment, when the cell associated with the first Preamble comprises the first cell, all bits in the first bit block are used for determining the first air interface resource.

As one embodiment, when the cell associated with the first Preamble comprises the first cell, any bit in the first bit block is used for determining the first air interface resource.

As one embodiment, when the cell associated with the first Preamble does not comprise the first cell, the first bit block is also used for determining the first air interface resource.

As one embodiment, when the cell associated with the first Preamble does not comprise the first cell, a bit other than the first bit block is used for determining the first air interface resource.

As one embodiment, when the cell associated with the first Preamble does not comprise the first cell, the first air interface resource is determined by the first node.

As one embodiment, when the cell associated with the first Preamble does not comprise the first cell, at least part of bits in the first bit block are not used for determining the first air interface resource.

As one embodiment, when the cell associated with the first Preamble does not comprise the first cell, any bit in the first bit block is not used for determining the first air interface resource.

As one embodiment, the first bit block comprises the Random Access Preamble index field in the first DCI, and the first air interface resource comprises the first Preamble.

As one embodiment, the first bit block comprises the UL/SUL indicator field in the first DCI, and the first air interface resource comprises an uplink carrier for sending the first Preamble.

As one embodiment, the first bit block comprises the SS/PBCH index field in the first DCI, and the first air interface resource comprises an SSB for determining an RACH occasion of the first Preamble.

As one embodiment, the first bit block comprises the PRACH Mask index field in the first DCI, and the first air interface resource comprises an RACH occasion for the first Preamble that is associated with an SSB indicated by the one SS/PBCH index field.

As one embodiment, the first bit block is the Random Access Preamble index field in the first DCI, and the first air interface resource is the first Preamble.

As one embodiment, the first bit block is the UL/SUL indicator field in the first DCI, and the first air interface resource is an uplink carrier for sending the first Preamble.

As one embodiment, the first bit block is the SS/PBCH index field in the first DCI, and the first air interface resource is an SSB for determining an RACH occasion of the first Preamble.

As one embodiment, the first bit block is the PRACH Mask index field in the first DCI, and the first air interface resource is an RACH occasion for the first Preamble that is associated with an SSB indicated by the one SS/PBCH index field.

As one embodiment, the first bit block is at least one of the Random Access Preamble index field, the UL/SUL indicator field, the SS/PBCH index field, and the PRACH Mask index field in the first DCI, and the first air interface resource is at least one of the first Preamble, an uplink carrier for sending the first Preamble, an SSB for determining an RACH occasion of the first Preamble, and an RACH occasion for the first Preamble that is associated with an SSB indicated by the one SS/PBCH index field.

As one subsidiary embodiment of this sub-embodiment, the one UL/SUL indicator field indicates an uplink carrier for sending the first Preamble; and the first node is configured with supplementaryUplink on the first cell.

As one subsidiary embodiment of this sub-embodiment, the one UL/SUL indicator field is reserved; and the first node is not configured with supplementaryUplink on the first cell.

As one subsidiary embodiment of this sub-embodiment, the one SS/PBCH index field indicates an SSB for determining an RACH occasion of the first Preamble.

As one subsidiary embodiment of this sub-embodiment, the one PRACH Mask index field indicates an RACH occasion for the first Preamble that is associated with an SSB indicated by the one SS/PBCH index field.

As one embodiment, the first bit block is the SS/PBCH index field in the first DCI; and the first air interface resource comprises at least the former of an SSB for determining an RACH occasion of the first Preamble, or an RACH occasion for the first Preamble that is associated with an SSB for determining an RACH occasion of the first Preamble, or an uplink carrier for sending the first Preamble.

As one sub-embodiment of this embodiment, when the cell associated with the first Preamble comprises the first cell, the first bit block is used for determining the SSB for determining the RACH occasion of the first Preamble; and when the cell associated with the first Preamble does not comprise the first cell, the first bit block is used for determining the SSB for determining the RACH occasion of the first Preamble, the RACH occasion for the first Preamble that is associated with the SSB for determining the RACH occasion of the first Preamble, and the uplink carrier for sending the first Preamble.

As one sub-embodiment of this embodiment, when the cell associated with the first Preamble does not comprise the first cell, the first bit block indicates an index of the SSB for determining the RACH occasion of the first Preamble, and the first RRC message is used for determining the RACH occasion for the first Preamble that is associated with the SSB for determining the RACH occasion of the first Preamble, and the uplink carrier for sending the first Preamble; and the Random Access Preamble index field, the UL/SUL indicator field, and the PRACH Mask index field in the first DCI are reserved.

As one sub-embodiment of this embodiment, when the cell associated with the first Preamble comprises the first cell, the first bit block is used for determining the SSB for determining the RACH occasion of the first Preamble; and when the cell associated with the first Preamble does not comprise the first cell, the first bit block is used for determining the SSB for determining the RACH occasion of the first Preamble and the RACH occasion for the first Preamble that is associated with the SSB for determining the RACH occasion of the first Preamble.

As one sub-embodiment of this embodiment, when the cell associated with the first Preamble does not comprise the first cell, the first bit block indicates an index of the SSB for determining the RACH occasion of the first Preamble, and the first RRC message is used for determining the RACH occasion for the first Preamble that is associated with the SSB for determining the RACH occasion of the first Preamble, and the uplink carrier for sending the first Preamble; and the Random Access Preamble index field, the UL/SUL indicator field, and the PRACH Mask index field in the first DCI are reserved.

As one sub-embodiment of this embodiment, when the cell associated with the first Preamble does not comprise the first cell, the first bit block indicates an index of the SSB for determining the RACH occasion of the first Preamble, and the first RRC message is used for determining the RACH occasion for the first Preamble that is associated with the SSB for determining the RACH occasion of the first Preamble, and the uplink carrier for sending the first Preamble; and the Random Access Preamble index field, the UL/SUL indicator field, and the PRACH Mask index field in the first DCI are reserved.

As one embodiment, the first bit block is the Random Access Preamble index field in the first DCI, and the first bit block is set to all 0; and the first air interface resource comprises at least one of the SSB for determining the RACH occasion of the first Preamble, or the RACH occasion for the first Preamble that is associated with the SSB for determining the RACH occasion of the first Preamble, or the uplink carrier for sending the first Preamble.

As one sub-embodiment of this embodiment, when the cell associated with the first Preamble comprises the first cell, the first bit block is used for determining the first air interface resource; and when the cell associated with the first Preamble does not comprise the first cell, the first bit block is used for determining the first air interface resource.

As one sub-embodiment of this embodiment, when the cell associated with the first Preamble comprises the first cell, the first bit block is used for determining that the first air interface resource is a CBRA resource; and when the cell associated with the first Preamble does not comprise the first cell, the first bit block is used for determining that the first air interface resource is the CFRA resource.

As one sub-embodiment of this embodiment, when the cell associated with the first Preamble comprise the first cell, the first bit block is used for determining that the first air interface resource is configured by an SIB1 of the first cell; and when the cell associated with the first Preamble does not comprise the first cell, the first bit block is used for determining that the first air interface resource is configured by the first RRC message.

As one sub-embodiment of this embodiment, when the cell associated with the first Preamble comprises the first cell, the second bit block is reserved; and when the cell associated with the first Preamble does not comprise the first cell, the second bit block indicates the cell associated with the first Preamble.

As one sub-embodiment of this embodiment, when the cell associated with the first Preamble comprises the first cell, any bit after the first bit block is reserved; when the cell associated with the first Preamble does not comprise the first cell, the second bit block indicates the cell associated with the first Preamble; and the second bit block is at least one bit after the first bit block.

As one sub-embodiment of this embodiment, when the cell associated with the first Preamble does not comprise the first cell, at least one bit other than the second bit block after the first bit block indicates at least one of sending power of the first Preamble or whether to monitor a response to the first Preamble.

As one sub-embodiment of this embodiment, the first air interface resource comprises the first Preamble.

As one sub-embodiment of this embodiment, the first air interface resource comprises the uplink carrier for sending the first Preamble.

As one sub-embodiment of this embodiment, the first air interface resource comprises the SSB for determining the RACH occasion of the first Preamble.

As one sub-embodiment of this embodiment, the first air interface resource comprises the RACH occasion for the first Preamble that is associated with the SSB for determining the RACH occasion of the first Preamble.

As one sub-embodiment of this embodiment, the second bit block occupies the UL/SUL indicator field.

As one sub-embodiment of this embodiment, the second bit block occupies at least one bit in the SS/PBCH index field.

As one sub-embodiment of this embodiment, the second bit block occupies at least one bit in the PRACH Mask index field.

As one sub-embodiment of this embodiment, the second bit block occupies at least one bit after the PRACH Mask index field.

As one sub-embodiment of this embodiment, when the first bit block is set to all 0 and the cell associated with the first Preamble comprises the first cell, the first air interface resource is the CBRA resource; and when the first bit block is set to all 0 and the cell associated with the first Preamble does not comprise the first cell, the first air interface resource is the CFRA resource.

As one sub-embodiment of this embodiment, when the first bit block is set to all 0 and the cell associated with the first Preamble comprises the first cell, an SIB1 message of the first cell is used for determining the first air interface resource; and when the first bit block is set to all 0 and the cell associated with the first Preamble does not comprise the first cell, the first RRC message is used for determining the first air interface resource.

As one embodiment, the first bit block is the UL/SUL indicator field in the first DCI; and the first air interface resource comprises the uplink carrier for sending the first Preamble.

As one sub-embodiment of this embodiment, when the cell associated with the first Preamble does not comprise the first cell, the first RRC message indicates the first air interface resource.

As one sub-embodiment of this embodiment, when the cell associated with the first Preamble does not comprise the first cell, the first air interface resource is default.

As one sub-embodiment of this embodiment, when the cell associated with the first Preamble does not comprise the first cell, the first air interface resource is predefined.

As one sub-embodiment of this embodiment, when the cell associated with the first Preamble does not comprise the first cell, the first air interface resource is NUL.

As one sub-embodiment of this embodiment, when the cell associated with the first Preamble does not comprise the first cell, the first bit block is used for determining at least one of the sending power of the first Preamble or whether to monitor a response to the first Preamble.

As one sub-embodiment of this embodiment, when the cell associated with the first Preamble does not comprise the first cell, the first bit block is reserved.

As one embodiment, the first signaling is interpreted preferentially.

As one embodiment, the first signaling is used for determining whether to reinterpret the first bit block.

As one embodiment, the first signaling is used for determining the interpretation of the second bit block.

As one embodiment, the second bit block in the first DCI is interpreted preferentially.

As one embodiment, the first DCI comprises that the second bit block is used for determining the reinterpretation of at least one field among the Random Access Preamble index field, the UL/SUL indicator field, the SS/PBCH index field, and the PRACH Mask index field in the first DCI.

As one embodiment, the first DCI comprises that the second bit block is used for determining that at least one field among the Random Access Preamble index field, the UL/SUL indicator field, the SS/PBCH index field, and the PRACH Mask index field in the first DCI is reserved.

As one embodiment, the first node is one piece of UE supporting 3GPP Release 18.

As one embodiment, the first node is one piece of UE supporting LTM.

As one embodiment, the first node is one piece of UE supporting 3GPP Release 18 and supporting LTM.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatuses. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the node 203 corresponds to a second node in the present application.

As one embodiment, the node 203 is one BaseStation (BS) device.

As one embodiment, the node 203 is one base transceiver station (BTS).

As one embodiment, the node 203 is one NodeB (NB).

As one embodiment, the node 203 is one gNB.

As one embodiment, the node 203 is one eNB.

As one embodiment, the node 203 is one ng-eNB.

As one embodiment, the node 203 is one en-gNB.

As one embodiment, the node 203 is one CU (Centralized Unit).

As one embodiment, the node 203 is one DU (Distributed Unit).

As one embodiment, the node 203 is user equipment.

As one embodiment, the node 203 is one relay.

As one embodiment, the node 203 is a gateway.

As one embodiment, the node 204 corresponds to a third node in the present application.

As one embodiment, the node 204 corresponds to a fourth node in the present application.

As one embodiment, the node 204 is one BS.

As one embodiment, the node 204 is one BTS.

As one embodiment, the node 204 is one NB.

As one embodiment, the node 204 is one gNB.

As one embodiment, the node 204 is one eNB.

As one embodiment, the node 204 is one ng-eNB.

As one embodiment, the node 204 is one en-gNB.

As one embodiment, the node 204 is user equipment.

As one embodiment, the node 204 is one relay.

As one embodiment, the node 204 is a gateway.

As one embodiment, the node 204 is one CU.

As one embodiment, the node 204 is one DU.

As one embodiment, the node 203 and the node 204 are connected by an ideal backhaul.

As one embodiment, the node 203 and the node 204 are connected by a non-ideal backhaul.

As one embodiment, the node 203 and the node 204 simultaneously provide radio resources for the UE201.

As one embodiment, the node 203 and the node 204 do not simultaneously provide radio resources for the UE201.

As one embodiment, the node 203 and the node 204 are the same node.

As one embodiment, the node 203 and the node 204 are two different nodes.

As one embodiment, the node 203 and the node 204 belong to the same CU.

As one embodiment, the node 203 and the node 204 belong to two different CUs.

As one embodiment, the node 203 and the node 204 belong to the same DU.

As one embodiment, the node 203 and the node 204 belong to two different DUs.

As one embodiment, the user equipment supports transmission in a non-terrestrial network (NTN).

As one embodiment, the user equipment supports transmission in a terrestrial network.

As one embodiment, the user equipment supports transmission in a large delay difference network.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises a terminal of industrial Internet of Things.

As one embodiment, the user equipment comprises a device supporting low-latency and high-reliability transmission.

As one embodiment, the user equipment comprises a test device.

As one embodiment, the user equipment comprises a signaling tester.

As one embodiment, the base station device supports transmission in a non-terrestrial network.

As one embodiment, the base station device supports transmission in a large delay difference network.

As one embodiment, the base station device supports transmission in a terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a base station device supporting a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of an embodiment of a wireless protocol architecture of one user plane and one control plane according to the present application, as shown in FIG. 3. FIG. 3 is a schematic diagram illustrating the embodiment of a radio protocol architecture for a user plane 350 and a control plane 300. FIG. 3 shows a radio protocol architecture for the control plane 300 using three layers: a Layer 1, a Layer 2, and a Layer 3. The layer 1 (L1 layer) is the lowest layer and implements various PHY (physical layer) signal processing functions. The L1 layer will be referred to as a PHY301 herein. The Layer 2 (L2 layer) 305 is above the PHY301, and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearer and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transmission channels. The MAC sublayer 302 is also responsible for assigning various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, the wireless protocol architecture in FIG. 3 is applicable to a third node in the present application.

As one embodiment, first signaling in the present application is generated in an RRC306.

As one embodiment, the first signaling in the present application is generated in an MAC302 or MAC352.

As one embodiment, the first signaling in the present application is generated in the PHY301 or PHY351.

As one embodiment, first DCI in the present application is generated in the PHY301 or the PHY351.

As one embodiment, a first Preamble in the present application is generated in the PHY301 or the PHY351.

As one embodiment, a first RRC message in the present application is generated in the RRC306.

### Embodiment 4

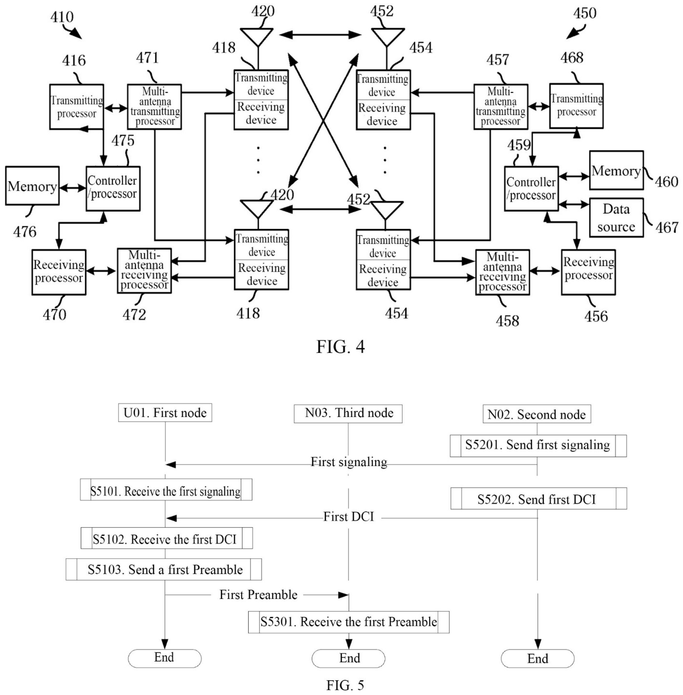

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource assignment to the first communication device 450 based on various priority metrics. The controller/processor 475 is also responsible for retransmission of lost packets, and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes the each spatial stream with a reference signal (e.g., pilot frequency) in the time domain and/or frequency domain, and then uses an inverse fast Fourier transform (IFFT) to produce a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts the radio frequency stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and soft decisions are generated. The receiving processor 456 then decodes and deinterleaves the soft decisions to recover upper-layer data and a control signal transmitted by the second communication device 410 on the physical channel. The upper-layer data and the control signal are then provided to the controller/processor 459. The controller/processor 459 implements functions of the L2 layer. The controller/processor 459 may be associated with the memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. The upper-layer data packet is provided to all protocol layers above the L2 layer. Various control signals may also be provided to an L3 for L3 processing.

In transmission from the first communication device 450 to the second communication device 410, at the first communication device 450, the upper-layer data packet is provided to the controller/processor 459 using the data source 467. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource assignment, and implements the function of the L2 layer for the user plane and the control plane. The controller/processor 459 is also responsible for retransmission of lost packets, and signaling to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, and the transmitting processor 468 then modulates the produced spatial stream into a multi-carrier/single-carrier symbol stream, which is then provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency stream, which is then provided to different antennas 452.

In the transmission from the first communication device 450 to the second communication device 410, a function at the second communication device 410 is similar to a receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements the functions of the L2 layer. The controller/processor 475 may be associated with the memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packet from UE450. The upper-layer data packet from the controller/processor 475 may be provided to the core network.

As one embodiment, the first communication device 450 corresponds to a first node in the present application; the first communication device 450 comprises: at least one processor and at least one memory, the at least one memory comprising a computer program code; the at least one memory and the computer program code are configured to be used together with the at least one processor, and the first communication device 450 comprises at least: a first receiver receiving first signaling and receiving first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and a first transmitter, in response to the reception of the first DCI, sending a first Preamble on a first air interface resource, wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the first communication device 450 corresponds to the first node in the present application; the first communication device 450 comprises: a memory storing a computer-readable instruction program, the computer-readable instruction program, when executed by at least one processor, generating actions, and the actions comprising: the first receiver receiving the first signaling and receiving the first DCI, wherein the first DCI is identified by the C-RNTI of the first node in the first cell, the first DCI comprises the first bit block and the second bit block, the first bit block comprises at least one bit, the second bit block comprises at least one bit, and any bit comprised in the second bit block does not belong to the first bit block; and the first transmitter, in response to the reception of the first DCI, sending the first Preamble on the first air interface resource, wherein the first signaling is used for determining whether the second bit block indicates the cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the second communication device 410 corresponds to a second node in the present application; the second communication device 410 comprises: at least one processor and at least one memory, the at least one memory comprising a computer program code; and the at least one memory and the computer program code are configured to be used together with the at least one processor. The second communication device 410 at least: sends the first signaling and sends the first DCI, wherein the first DCI is identified by the C-RNTI of a recipient of the first DCI in the first cell, the first DCI comprises the first bit block and the second bit block, the first bit block comprises at least one bit, the second bit block comprises at least one bit, and any bit comprised in the second bit block does not belong to the first bit block, wherein in response to the reception of the first DCI by the recipient of the first DCI, the first Preamble is sent by the recipient of the first DCI on the first air interface resource; the first signaling is used for determining whether the second bit block indicates the cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the second communication device 410 corresponds to the second node in the present application; and the second communication device 410 comprises: a memory storing a computer-readable instruction program, the computer-readable instruction program, when executed by at least one processor, generating actions, and the actions comprising: sending the first signaling and sending the first DCI, wherein the first DCI is identified by the C-RNTI of the recipient of the first DCI in the first cell, the first DCI comprises the first bit block and the second bit block, the first bit block comprises at least one bit, the second bit block comprises at least one bit, and any bit comprised in the second bit block does not belong to the first bit block, wherein in response to the reception of the first DCI by the recipient of the first DCI, the first Preamble is sent by the recipient of the first DCI on the first air interface resource; the first signaling is used for determining whether the second bit block indicates the cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the second communication device 410 corresponds to the second node in the present application; the second communication device 410 comprises: at least one processor and at least one memory, the at least one memory comprising a computer program code; and the at least one memory and the computer program code are configured to be used together with the at least one processor. The second communication device 410 at least: receives the first Preamble on the first air interface resource, wherein the first signaling is received by a sender of the first Preamble and the first DCI is received by the sender of the first Preamble, the first DCI is identified by the C-RNTI of the sender of the first Preamble in the first cell, the first DCI comprises the first bit block and the second bit block, the first bit block comprises at least one bit, the second bit block comprises at least one bit, and any bit comprised in the second bit block does not belong to the first bit block; the first signaling is used for determining whether the second bit block indicates the cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the second communication device 410 corresponds to the second node in the present application; and the second communication device 410 comprises: a memory storing a computer-readable instruction program, the computer-readable instruction program, when executed by at least one processor, generating actions, and the actions comprising: receiving the first Preamble on the first air interface resource, wherein the first signaling is received by the sender of the first Preamble and the first DCI is received by the sender of the first Preamble, the first DCI is identified by the C-RNTI of the sender of the first Preamble in the first cell, the first DCI comprises the first bit block and the second bit block, the first bit block comprises at least one bit, the second bit block comprises at least one bit, and any bit comprised in the second bit block does not belong to the first bit block; the first signaling is used for determining whether the second bit block indicates the cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving the first DCI.

As one embodiment, at least one of the antenna 420, the transmitting device 418, the transmitting processor 416, and the controller/processor 475 is used for sending the first DCI.

As one embodiment, at least one of the antenna 452, the receiving device 454, the receiving processor 456, and the controller/processor 459 is used for receiving a first RRC message.

As one embodiment, at least one of the antenna 420, the transmitting device 418, the transmitting processor 416, and the controller/processor 475 is used for sending the first RRC message.

As one embodiment, at least one of the antenna 452, the transmitting device 454, the transmitting processor 468, and the controller/processor 459 is used for sending the first Preamble.

As one embodiment, at least one of the antenna 420, the receiving device 418, the receiving processor 470, and the controller/processor 475 is used for receiving the first Preamble.

As one embodiment, the first communication device 450 is one piece of user equipment.

As one embodiment, the first communication device 450 is one base station device.

As one embodiment, the first communication device 450 is one relay device.

As one embodiment, the second communication device 410 corresponds to the second node in the present application; and the second communication device 410 is one piece of user equipment.

As one embodiment, the second communication device 410 corresponds to the second node in the present application; and the second communication device 410 is one base station device.

As one embodiment, the second communication device 410 corresponds to the second node in the present application; and the second communication device 410 is one relay device.

As one embodiment, the second communication device 410 corresponds to a third node in the present application; and the second communication device 410 is one piece of user equipment.

As one embodiment, the second communication device 410 corresponds to the third node in the present application; and the second communication device 410 is one base station device.

As one embodiment, the second communication device 410 corresponds to the third node in the present application; and the second communication device 410 is one relay device.

### Embodiment 5

Embodiment 5 illustrates a flowchart of wireless signal transmission according to one embodiment of the present application, as shown in FIG. 5. It is particularly noted that the order in this example does not limit the signal transmission order and implementation order in the present application.

For a **first node U01,** in step S5101, first signaling is received; in step S5102, first DCI is received; and in step S5103, in response to the reception of the first DCI, a first Preamble is sent on a first air interface resource.

For a **second node N02,** in step S5201, the first signaling is sent; and in step S5202, the first DCI is sent.

For a **third node N03,** in step S5301, the first Preamble is received.

In Embodiment 5, the first DCI is identified by a C-RNTI of a first node in a first cell, the first DCI comprises a first bit block and a second bit block, the first bit block comprises at least one bit, the second bit block comprises at least one bit, and any bit comprised in the second bit block does not belong to the first bit block; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the first node U01 is one piece of user equipment.

As one embodiment, the first node U01 is one base station device.

As one embodiment, the first node U01 is one relay device.

As one embodiment, the second node N02 is a maintenance node of the first cell; and the cell associated with the first Preamble comprises the first cell.

As one embodiment, the second node N02 is one TRP.

As one embodiment, the second node N02 is one DU.

As one embodiment, the second node N02 is one CU.

As one embodiment, the second node N02 is one radio frequency unit.

As one embodiment, the second node N02 is one base station device.

As one embodiment, the third node N03 is a maintenance node of a second cell; and the cell associated with the first Preamble does not comprise the first cell.

As one embodiment, the third node N03 is one TRP.

As one embodiment, the third node N03 is one DU.

As one embodiment, the third node N03 is one CU.

As one embodiment, the third node N03 is one radio frequency unit.

As one embodiment, the third node N03 is one base station device.

As one embodiment, the second node N02 and the third node N03 belong to the same base station device.

As one embodiment, there is an ideal backhaul between the second node N02 and the third node N03.

As one embodiment, there is a non-ideal backhaul between the second node N02 and the third node N03.

As one embodiment, the second node N02 and the third node N03 belong to different CUs.

As one embodiment, the second node N02 and the third node N03 belong to different DUs.

As one embodiment, the second node N02 and the third node N03 belong to different TRPs.

As one embodiment, a wireless backhaul is comprised between the second node N02 and the third node N03.

As one embodiment, there is a wireless backhaul between the second node N02 and the third node N03.

As one embodiment, a wired backhaul is comprised between the second node N02 and the third node N03.

As one embodiment, the second node N02 and the third node N03 are co-located.

As one embodiment, the second node N02 and the third node N03 are not co-located.

As one embodiment, the second node N02 and the third node N03 being co-located/not co-located refers to: the second node N02 and the third node N03 belong to the same TRP/different TRPs.

As one embodiment, the second node N02 and the third node N03 being co-located/not co-located refers to: the second node N02 and the third node N03 belong to the same DU/different DUs.

As one embodiment, the second node N02 and the third node N03 being co-located/not co-located refers to: the second node N02 and the third node N03 belong to the same CU/different CUs.

As one embodiment, the second node N02 and the third node N03 being co-located/not co-located refers to: the second node N02 and the third node N03 belong to the same base station/different base stations.

As one embodiment, the second node N02 and the third node N03 being co-located/not co-located refers to: physical locations of the second node N02 and the third node N03 are the same/different.

As one embodiment, when the cell associated with the first Preamble does not comprise the first cell, an RRC message is used for determining whether to monitor a response to the first Preamble.

As one embodiment, when the cell associated with the first Preamble does not comprise the first cell, a first RRC message is used for determining whether to monitor a response to the first Preamble.

As one embodiment, when the cell associated with the first Preamble does not comprise the first cell, one bit block other than the first bit block in the first DCI is used for determining whether to monitor a response to the first Preamble.

As one embodiment, when the cell associated with the first Preamble does not comprise the first cell, preambleTransMax is configured by the first RRC message.

As one embodiment, when the cell associated with the first Preamble does not comprise the first cell, preambleTransMax is considered to be 1.

As one embodiment, the meaning of the preambleTransMax being considered to be 1 is: preambleTransMax is default.

As one embodiment, the meaning of the preambleTransMax being considered to be 1 is: preambleTransMax is not configured by an RRC.

### Embodiment 6

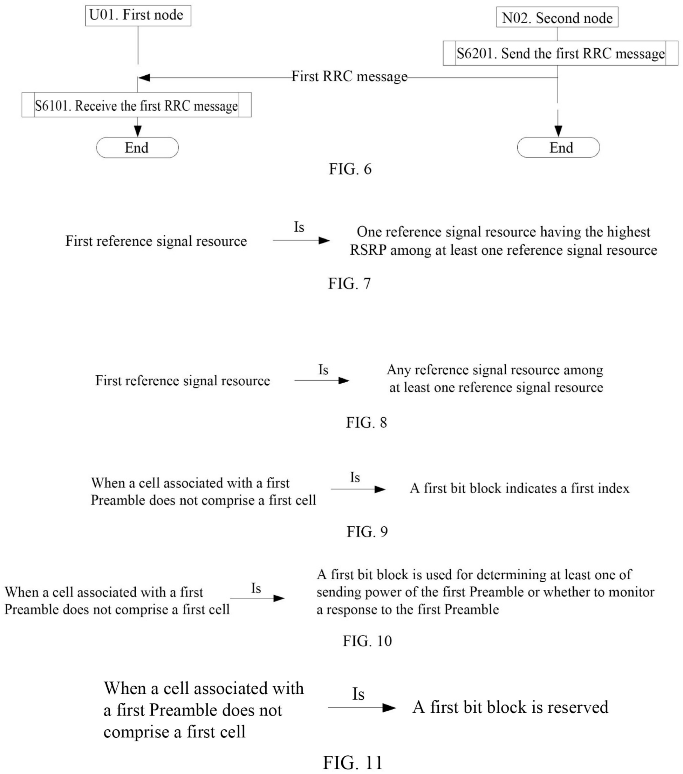

Embodiment 6 illustrates a flowchart of wireless signal transmission according to another embodiment of the present application, as shown in FIG. 6. It is particularly noted that the order in this example does not limit the signal transmission order and implementation order in the present application.

For a **first node U01,** in step S6101, a first RRC message is received, the first RRC message being used for configuring at least one Preamble and at least one reference signal resource of a second cell, and the at least one Preamble being associated with the at least one reference signal resource.

For a **second node N02,** in step S6201, the first RRC message is sent.

In Embodiment 6, a first Preamble is one Preamble among the at least one Preamble; a first reference signal resource is one reference signal resource among the at least one reference signal resource; a first air interface resource comprises the first reference signal resource; a second bit block indicates that a cell associated with the first Preamble is the second cell; and the cell associated with the first Preamble does not comprise a first cell.

As one embodiment, the second bit block indicates the second cell.

As one embodiment, the second cell is a cell other than the first cell.

As one embodiment, the first RRC message is an RRC message of one downlink (DL).

As one embodiment, the first RRC message is an RRC message of one sidelink (SL).

As one embodiment, the first RRC message is a UE-specific RRC message.

As one embodiment, the UE-specific RRC message refers to: an RRC message transmitted by a DCCH.

As one embodiment, the UE-specific RRC message refers to: an RRC message transmitted by an SCCH (Dedicated Control Channel).

As one embodiment, the UE-specific RRC message refers to: an RRC message transmitted by an SRB1 (Signaling radio bearer 1) or an SRB3 (Signaling radio bearer 3).

As one embodiment, the UE-specific RRC message refers to: an RRC message transmitted by an SL-SRB3.

As one embodiment, the UE-specific RRC message refers to: a unicast RRC message.

As one embodiment, the first RRC message is one RRCReconfiguration message.

As one embodiment, the first RRC message is one RRCResume message.

As one embodiment, the first RRC message is one RRCReestablishment message.

As one embodiment, the first RRC message is one RRCReconfigurationSidelink message.

As one embodiment, the first RRC message is one DLInformationTransferMRDC message, and the one DLInformationTransferMRDC message comprises one RRCReconfiguration message.

As one embodiment, the first RRC message is any one of at least the former of one RRCReconfiguration message, or an RRCResume message, or an RRCReestablishment message, or an RRCSetup message.

As one embodiment, the first RRC message comprises only a first RRC information block.

As one embodiment, the first RRC message comprises multiple RRC information blocks, each RRC information block among the multiple RRC information blocks comprises configuration information of at least one cell, and the first RRC information block is one of the multiple RRC information blocks.

As one sub-embodiment of this embodiment, each RRC information block among the multiple RRC information blocks comprises configuration information of only one cell.

As one sub-embodiment of this embodiment, each RRC information block among the multiple RRC information blocks comprises configuration information of each cell in a cell group to which one cell belongs.

As one sub-embodiment of this embodiment, each cell among the at least one cell is one candidate cell of the first cell.

As one sub-embodiment of this embodiment, only one cell among the at least one cell is one candidate cell of the first cell.

As one embodiment, the first RRC information block comprises the configuration information of only the second cell.

As one embodiment, the first RRC information block comprises configuration information of each cell in a cell group to which the second cell belongs.

As one embodiment, the first RRC information block comprises configuration information of at least one candidate cell of the first cell, and the second cell is one of the at least one candidate cell.

As one embodiment, the configuration information of the second cell comprises configuration information of a physical layer of the second cell.

As one embodiment, the configuration information of the second cell comprises a C (Cell)-RNTI (Radio Network Temporary Identifier) of a first node in the second cell.

As one embodiment, the configuration information of the second cell comprises common configuration information of the second cell.

As one embodiment, the configuration information of the second cell comprises at least part of fields in a ServingCellConfigCommon IE.

As one embodiment, the configuration information of the second cell comprises a PCI of the second cell.

As one embodiment, the configuration information of the second cell comprises a downlink common configuration (DownlinkConfigCommon) of the second cell.

As one embodiment, the configuration information of the second cell comprises an uplink common configuration (UplinkConfigCommon) of the second cell.

As one embodiment, the configuration information of the second cell comprises a period of an SSB of the second cell.

As one embodiment, the configuration information of the second cell comprises a PBCH of the second cell.

As one embodiment, the first RRC information block is one RRC contenter.

As one embodiment, the first RRC information block is one RRC IE (Information Element).

As one embodiment, the first RRC information block is one RRC message.

As one embodiment, the first RRC information block comprises at least one RRC IE.

As one embodiment, the first RRC information block comprises at least one RRC field.

As one embodiment, the first RRC information block is one RRCReconfiguration message.

As one embodiment, the first RRC information block is one CellGroupConfig IE.

As one embodiment, the first RRC information block comprises one cellGroupld, and the one cellGroupld indicates a cell group to which the first cell belongs.

As one embodiment, the first RRC information block is associated with a first candidate configuration index, and the first candidate configuration index indicates the second cell.

As one embodiment, the first RRC message comprises the first candidate configuration index, and the first candidate configuration index indicates the second cell.

As one embodiment, the first RRC information block comprises the first candidate configuration index, and the first candidate configuration index indicates the second cell.

As one embodiment, the first candidate configuration index is used for indicating the second cell.

As one embodiment, the first candidate configuration index is used for indicating the second cell in an LTM command.

As one embodiment, the first candidate configuration index is used for indicating the second cell in a PDCCH order.

As one embodiment, when first signaling is received, the second cell is not configured with any candidate configuration index.

As one embodiment, the first RRC information block comprises one newUE-Identity field, and the one newUE-Identity field indicates a C-RNTI of the first node in the second cell.

As one embodiment, the first RRC information block comprises one field, and the one field is used for configuring a random access resource on the second cell.

As one embodiment, the first RRC information block comprises one ServingCellConfigCommon IE, and the one ServingCellConfigCommon IE comprises a PhysCellId of the second cell.

As one sub-embodiment of this embodiment, the first RRC information block comprises one CellGroupConfig IE, and the one CellGroupConfig IE comprises the one ServingCellConfigCommon IE.

As one sub-embodiment of this embodiment, the first RRC information block comprises one SpCellConfig field, and the one SpCellConfig field comprises the one ServingCellConfigCommon IE.

As one sub-embodiment of this embodiment, the first RRC information block comprises one ReconfigurationWithSync field, and the one ReconfigurationWithSync field comprises the one ServingCellConfigCommon IE.

As one sub-embodiment of this embodiment, the one ServingCellConfigCommon IE comprises one DownlinkConfigCommon IE.

As one sub-embodiment of this embodiment, the one ServingCellConfigCommon IE comprises one UplinkConfigCommon IE.

As one sub-embodiment of this embodiment, the one ServingCellConfigCommon IE comprises one n-TimingAdvanceOffset field.

As one sub-embodiment of this embodiment, the one ServingCellConfigCommon IE comprises one ssb-PositionsInBurst field.

As one sub-embodiment of this embodiment, the one ServingCellConfigCommon IE comprises one ss-PBCH-BlockPower field.

As one embodiment, the first RRC information block indicates the configuration information of at least the second cell.

As one embodiment, the first RRC information block is used for determining the configuration information of at least the second cell.

As one embodiment, the first RRC information block is used for configuring the configuration information of at least the second cell.

As one embodiment, the configuration information of the second cell is stored in a first variable.

As one sub-embodiment of this embodiment, in response to the reception of the first RRC information block, the first RRC information block is stored or updated in the first variable.

As one sub-embodiment of this embodiment, in response to the reception of the first RRC message, the at least first RRC information block is stored or updated in the first variable.

As one sub-embodiment of this embodiment, in response to the reception of the first RRC information block, the configuration information of the at least second cell is stored or updated in the first variable.

As one sub-embodiment of this embodiment, in response to the reception of the first RRC message, configuration information of each cell in the at least first RRC information block is stored or updated in the first variable.

As one embodiment, at least one candidate cell of the first cell is stored in the first variable.

As one embodiment, each candidate cell of the first cell is stored in the first variable.

As one embodiment, at least one candidate cell of the first cell is not stored in the first variable.

As one embodiment, the first variable is used for LTM.

As one embodiment, the first variable is a VarConditionalReconfig.

As one embodiment, a name of the first variable comprises at least the former of Var, or LTM, or Mobility, or an L1, or an L2.

As one embodiment, the first RRC message is used for configuring an association between the at least one Preamble and the at least one reference signal resource of the second cell.

As one embodiment, the first RRC message is used for associating the at least one Preamble of the second cell with the at least one reference signal resource of the second cell.

As one embodiment, each reference signal resource among the at least one reference signal resource is an SSB resource.

As one embodiment, each reference signal resource among the at least one reference signal resource is a CSI (Channel State Information)-RS (Reference Signal) resource.

As one embodiment, one reference signal resource among the at least one reference signal resource is an SSB resource.

As one embodiment, one reference signal resource among the at least one reference signal resource is a CSI-RS resource.

As one embodiment, one reference signal resource among the at least one reference signal resource is one of an SSB resource or a CSI-RS resource.

As one embodiment, the SSB resource is indexed by an SSB-Index.

As one embodiment, the CSI-RS resource is indexed by a CSI-RS-Index.

As one embodiment, each Preamble among the at least one Preamble is indexed by an ra-PreambleIndex.

As one embodiment, the first RRC message is used for configuring an index of each Preamble among at least one Preamble of the second cell and an index of each reference signal resource among the at least one reference signal resource.

As one embodiment, the first RRC message is used for configuring at least one Preamble, at least one reference signal resource, and at least one mask of the second cell, a first mask is one mask among the at least one mask, and the first mask is used for determining the first air interface resource.

As one embodiment, the number of the at least one Preamble is the same as the number of the at least one reference signal resource.

As one embodiment, the number of the at least one Preamble is different from the number of the at least one reference signal resource.

As one embodiment, the at least one Preamble is mapped one-to-one to the at least one reference signal resource.

As one embodiment, one Preamble among the at least one Preamble is configured to one reference signal resource among the at least one reference signal resource.

As one embodiment, one Preamble among the at least one Preamble is associated with one reference signal resource among the at least one reference signal resource.

As one embodiment, the first air interface resource is the first reference signal resource.

As one embodiment, the first air interface resource is the first reference signal resource and the first mask, and the first mask is used for determining an RACH occasion for the first Preamble that is associated with an SSB for determining an RACH occasion of the first Preamble.

As one embodiment, the first air interface resource is the first reference signal resource, the first mask, and a first carrier, and the first carrier is used for sending an uplink carrier of the first Preamble.

As one embodiment, the second bit block indicates that the second cell is used for determining that the cell associated with the first Preamble is the second cell.

As one sub-embodiment of this embodiment, the second bit block indicates an identifier of the second cell.

As one sub-embodiment of this embodiment, the second cell indicated by the second bit block is the cell associated with the first Preamble.

### Embodiment 7

Embodiment 7 illustrates a schematic diagram of a first reference signal resource being one reference signal resource having the highest RSRP among at least one reference signal resource according to one embodiment of the present application.

In Embodiment 7, a first RRC message is used for configuring at least one Preamble and at least one reference signal resource of a second cell, and the at least one Preamble is associated with the at least one reference signal resource; a first Preamble is one Preamble among the at least one Preamble; the first reference signal resource is one reference signal resource among the at least one reference signal resource; a first air interface resource comprises the first reference signal resource; a second bit block indicates that a cell associated with the first Preamble is the second cell; the cell associated with the first Preamble does not comprise a first cell; and the first reference signal resource is one reference signal resource having the highest RSRP among the at least one reference signal resource.

As one embodiment, the RSRP is RSRP of a Layer 1.

As one embodiment, the RSRP is RSRP of a Layer 3.

As one embodiment, the RSRP is L1-RSRP.

As one embodiment, the RSRP is SS-RSRP.

As one embodiment, the RSRP is CSI-RSRP.

As one embodiment, a measurement for one reference signal resource is used for determining RSRP of this reference signal resource.

As one embodiment, the measurement is based on a latest unfiltered L1-RSRP measurement.

As one embodiment, a first node selects the first reference signal resource from the at least one reference signal resource.

As one embodiment, the first node selects one reference signal resource with the highest RSRP from the at least one reference signal resource; and the first reference signal resource is the one selected reference signal resource with the highest RSRP.

As one embodiment, the first node determines that the first reference signal resource does not depend on whether RSRP of the first reference signal resource is greater than an RSRP threshold configured by an RRC message.

As one embodiment, the first node determines that the first reference signal resource is unrelated to whether the RSRP of the first reference signal resource is greater than the RSRP threshold configured by the RRC message.

As one embodiment, the first node determines that the first reference signal resource does not depend on whether the RSRP of the at least one reference signal resource is greater than the RSRP threshold configured by the RRC message.

As one embodiment, the first node determines that the first reference signal resource is unrelated to whether the RSRP of any reference signal resource in the at least one air interface resource is greater than the RSRP threshold configured by the RRC message.

As one embodiment, the first node determines that the first reference signal resource is unrelated to an rsrp-ThresholdSSB; and the first reference signal resource is one SSB.

As one embodiment, the first node determines that the first reference signal resource is unrelated to an rsrp-ThresholdCSI-RS; and the first reference signal resource is one CSI-RS.

As one embodiment, one rsrp-ThresholdSSB field is comprised in the first RRC message.

As one embodiment, one rsrp- ThresholdSSB-SUL field is comprised in the first RRC message.

As one embodiment, one rsrp-ThresholdSSB field is not comprised in the first RRC message.

As one embodiment, one rsrp-ThresholdSSB field is not comprised and one rsrp-ThresholdSSB field is not comprised in the first RRC message.

As one embodiment, an SS/PBCH index field in first DCI does not indicate an index of the first reference signal resource.

As one embodiment, the first DCI does not indicate a first index.

### Embodiment 8

Embodiment 8 illustrates a schematic diagram of a first reference signal resource being any reference signal resource among at least one reference signal resource according to one embodiment of the present application.

In Embodiment 8, the first RRC message is used for configuring at least one Preamble and at least one reference signal resource of a second cell, and the at least one Preamble is associated with the at least one reference signal resource; the first Preamble is one Preamble among the at least one Preamble; a first reference signal resource is one reference signal resource among the at least one reference signal resource; the first air interface resource comprises the first reference signal resource; the second bit block indicates that a cell associated with the first Preamble is the second cell; the cell associated with the first Preamble does not comprise the first cell; and the first reference signal resource is any reference signal resource among the at least one reference signal resource.

As one embodiment, how the first node selects one reference signal resource from the at least one reference signal resource is not defined.

As one embodiment, how the first node selects one reference signal resource from the at least one reference signal resource is implemented by UE.

As one embodiment, the first node selects any reference signal resource from the at least one reference signal resource; and the first reference signal resource is the any selected reference signal resource.

As one embodiment, the first node selects one reference signal resource from the at least one reference signal resource based on UE implementation; and the first reference signal resource is the one selected reference signal resource.

As one embodiment, the first node randomly selects one reference signal resource from the at least one reference signal resource; and the first reference signal resource is the one selected reference signal resource.

As one embodiment, the first node selecting one reference signal resource from the at least one reference signal resource is unrelated to RSRP.

As one embodiment, the first node determining the first reference signal resource is unrelated to RSRP of the first reference signal resource.

As one embodiment, determining, by the first node, the first reference signal resource is unrelated to RSRP of any reference signal resource among the at least one reference signal resource.

As one embodiment, an SS/PBCH index field in the first DCI does not indicate an index of the first reference signal resource.

As one embodiment, the first DCI does not indicate the first index.

### Embodiment 9

Embodiment 9 illustrates a schematic diagram of a first bit block indicating a first index according to one embodiment of the present application, as shown in FIG. 9.

In Embodiment 9, when a cell associated with a first Preamble does not comprise a first cell, the first bit block indicates the first index; the first index indicates at least the former of a first reference signal resource and the first Preamble; and the first RRC message is used for determining the first index.

As one embodiment, the meaning of the phrase "the interpretation of the first bit block depends on whether the cell associated with the first Preamble comprises the first cell" is: when the cell associated with the first Preamble comprises the first cell, the first bit block is used for determining a first air interface resource; and when the cell associated with the first Preamble does not comprise the first cell, the first bit block indicates the first index.

As one embodiment, the first bit block indicating the first index refers to: a value of the first bit block is the first index.

As one embodiment, the first bit block indicating the first index refers to: the value of the first bit block corresponds to the first index.

As one embodiment, the first bit block indicating the first index refers to: the value of the first bit block is associated with the first index.

As one embodiment, the first bit block indicating the first index refers to: the value of the first bit block indicates the first index.

As one embodiment, the first bit block indicating the first index refers to: part of bits in the first bit block indicate the first index.

As one embodiment, the first bit block indicating the first index refers to: all bits in the first bit block indicate the first index.

As one embodiment, the first index indicates the first reference signal resource.

As one embodiment, the first index is an index of the first reference signal resource.

As one embodiment, the first index indicates the first reference signal resource and the first Preamble.

As one embodiment, the first index is an index of the first reference signal resource and the first Preamble.

As one embodiment, the first index indicates the first air interface resource, and the first air interface resource comprises the first reference signal resource.

As one embodiment, the first index indicates an index of the first air interface resource.

As one embodiment, the first air interface resource comprises the first reference signal resource.

As one embodiment, the first air interface resource comprises the first reference signal resource and the first Preamble.

As one embodiment, the first index indicates an order of the first air interface resource in at least one air interface resource.

As one embodiment, the first index is configured to the first air interface resource.

As one embodiment, the first index is configured to the first reference signal resource.

As one embodiment, the first index is configured to the first reference signal resource and the first Preamble.

As one embodiment, the first index is configured to the first reference signal resource, the first Preamble, and a first mask.

As one embodiment, the first index is one non-negative integer.

As one embodiment, the first index is one positive integer.

As one embodiment, the first RRC message comprises the first index.

As one embodiment, the first RRC message is configured with the first index.

As one embodiment, one IE of which a name comprises RACH-ConfigDedicated in the first RRC message is used for configuring the first index.

As one embodiment, one field of which a name comprises resources in the first RRC message is used for configuring the first index.

As one embodiment, one field of which a name comprises ssb-ResourceList in the first RRC message is used for configuring the first index.

As one embodiment, the first RRC message is used for determining at least one index, and each index among the at least one index indicates at least the former of one reference signal resource and one Preamble; and the first index in the at least one index indicates at least the former of the first reference signal resource and the first Preamble.

As one embodiment, the first RRC message comprises a first list, the first list comprises at least one entry, each entry among the at least one entry comprises one index, and each entry among the at least one entry indicates at least the former of one reference signal resource and one preamble; and a first entry in the at least one entry indicates at least the former of the first reference signal resource and the first Preamble, and the first index is an index of the first entry.

As one sub-embodiment of this embodiment, each entry among the at least one entry indicates one reference signal resource.

As one sub-embodiment of this embodiment, each entry among the at least one entry indicates one reference signal resource and one Preamble.

As one sub-embodiment of this embodiment, each entry among the at least one entry indicates one reference signal resource, one Preamble, and one PRACH mask.

As one sub-embodiment of this embodiment, each entry among the at least one entry indicates one reference signal resource, one Preamble, one PRACH mask, and one uplink/downlink carrier.

As one sub-embodiment of this embodiment, one IE of which a name comprises RACH-ConfigDedicated in the first RRC message is used for configuring the first list.

As one sub-embodiment of this embodiment, one field of which a name comprises resources in the first RRC message is used for configuring the first list.

As one sub-embodiment of this embodiment, one field of which a name comprises ssb-ResourceList in the first RRC message is used for configuring the first list.

### Embodiment 10

Embodiment 10 illustrates a schematic diagram of a first bit block being used for determining at least one of sending power of a first Preamble or whether to monitor a response to the first Preamble according to one embodiment of the present application, as shown in FIG. 10.

In Embodiment 10, when a cell associated with the first Preamble does not comprise a first cell, the first bit block is used for determining at least one of the sending power of the first Preamble or whether to monitor a response to the first Preamble.

As one embodiment, the meaning of the phrase "the interpretation of the first bit block depends on whether the cell associated with the first Preamble comprises the first cell" is: when the cell associated with the first Preamble comprises the first cell, the first bit block is used for determining a first air interface resource; and when the cell associated with the first Preamble does not comprise the first cell, the first bit block is used for determining at least one of the sending power of the first Preamble or whether to monitor a response to the first Preamble.

As one embodiment, when the cell associated with the first Preamble does not comprise the first cell, the first bit block is used for determining the sending power of the first Preamble.

As one sub-embodiment of this embodiment, at least one bit in the first bit block is used for determining the sending power of the first Preamble.

As one sub-embodiment of this embodiment, at least one bit in the first bit block indicates the sending power of the first Preamble.

As one sub-embodiment of this embodiment, the first bit block is used for determining whether to increase the sending power of the first Preamble.

As one sub-embodiment of this embodiment, one bit in the first bit block being set to 1 indicates increasing the sending power of the first Preamble; and one bit in the first bit block being set to 0 indicates not increasing the sending power of the first Preamble.

As one sub-embodiment of this embodiment, the first bit block indicates a value of one counter, and the value of the one counter is used for determining the sending power of the first Preamble.

As one embodiment, when the cell associated with the first Preamble does not comprise the first cell, the first bit block is used for determining whether to monitor a response to the first Preamble.

As one sub-embodiment of this embodiment, at least one bit in the first bit block is used for determining whether to monitor a response to the first Preamble.

As one sub-embodiment of this embodiment, one bit in the first bit block being set to 1 indicates monitoring a response to the first Preamble; and one bit in the first bit block being set to 0 indicates that a response to the first Preamble is not required to be monitored.

As one sub-embodiment of this embodiment, one bit in the first bit block being set to 0 indicates monitoring a response to the first Preamble; and one bit in the first bit block being set to 1 indicates that a response to the first Preamble is not required to be monitored.

As one embodiment, when the cell associated with the first Preamble does not comprise the first cell, the first bit block is used for determining the sending power of the first Preamble and whether to monitor a response to the first Preamble.

As one sub-embodiment of this embodiment, at least one bit in the first bit block is used for determining the sending power of the first Preamble and at least one bit in the first bit block is used for determining whether to monitor a response to the first Preamble.

As one sub-embodiment of this embodiment, when the cell associated with the first Preamble does not comprise the first cell and a response to the first Preamble is not required to be monitored, the first bit block is used for determining the sending power of the first Preamble.

### Embodiment 11

Embodiment 11 illustrates a schematic diagram of a first bit block being reserved according to one embodiment of the present application, as shown in FIG. 11.

In Embodiment 11, when a cell associated with a first Preamble does not comprise a first cell, the first bit block is reserved.

As one embodiment, the meaning of the phrase "the interpretation of the first bit block depends on whether the cell associated with the first Preamble comprises the first cell" is: when the cell associated with the first Preamble comprises the first cell, the first bit block is used for determining a first air interface resource; and when the cell associated with the first Preamble does not comprise the first cell, the first bit block is reserved.

As one embodiment, the first bit block being reserved refers to: the first bit block does not carry information.

As one embodiment, the first bit block being reserved refers to: the first bit block is not used for determining the first air interface resource.

As one embodiment, the first bit block being reserved refers to: the first bit block does not indicate the first air interface resource.

As one embodiment, the first bit block being reserved refers to: each bit in the first bit block is reserved.

As one embodiment, the first bit block being reserved refers to: the first bit block is considered as one reserved field.

As one embodiment, the cell associated with the first Preamble does not comprise the first cell, and a second bit block indicates the cell associated with the first Preamble.

### Embodiment 12

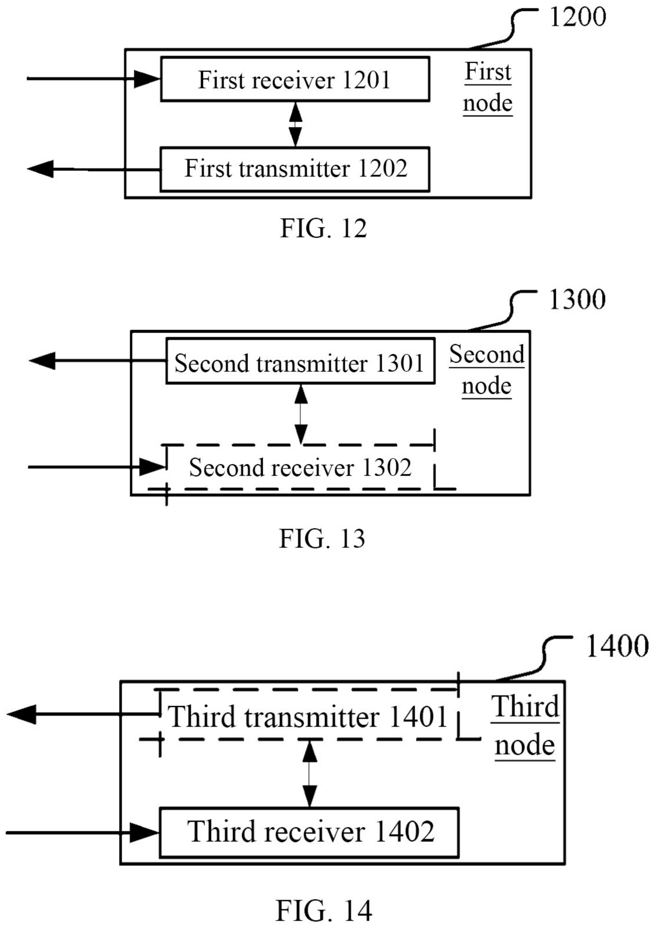

Embodiment 12 illustrates a structural block diagram of a processing apparatus used in a first node according to one embodiment of the present application, as shown in FIG. 12. In FIG. 12, a processing apparatus 1200 in the first node comprises a first receiver 1201 and a first transmitter 1202.

The first receiver 1201 receives first signaling and receives first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block;
the first transmitter 1202, in response to the reception of the first DCI, sends a first Preamble on a first air interface resource;
in Embodiment 12, the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the first receiver 1201 receives a first RRC message, the first RRC message being used for configuring at least one Preamble and at least one reference signal resource of a second cell, and the at least one Preamble being associated with the at least one reference signal resource, wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

As one embodiment, the first reference signal resource is one reference signal resource having the highest RSRP among the at least one reference signal resource.

As one embodiment, the first reference signal resource is any reference signal resource among the at least one reference signal resource.

As one embodiment, when the cell associated with the first Preamble does not comprise the first cell, the first bit block indicates a first index; the first index indicates at least the former of the first reference signal resource and the first Preamble; and the first RRC message is used for determining the first index.

As one embodiment, when the cell associated with the first Preamble does not comprise the first cell, the first bit block is used for determining at least one of sending power of the first Preamble or whether to monitor a response to the first Preamble.

As one embodiment, when the cell associated with the first Preamble does not comprise the first cell, the first bit block is reserved.

As one embodiment, the first receiver 1201 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1201 comprises the antenna 452, the receiving device 454, the multi-antenna receiving processor 458, and the receiving processor 456 in FIG. 4 of the present application.

As one embodiment, the first receiver 1201 comprises the antenna 452, the receiving device 454, and the receiving processor 456 in FIG. 4 of the present application.

As one embodiment, the first transmitter 1202 comprises the antenna 452, a transmitting device 454, a multi-antenna transmitting processor 457, a transmitting processor 468, the controller/processor 459, the memory 460, and the data source 467 in FIG. 4 of the present application.

As one embodiment, the first transmitter 1202 comprises the antenna 452, the transmitting device 454, the multi-antenna transmitting processor 457, and the transmitting processor 468 in FIG. 4 of the present application.

As one embodiment, the first transmitter 1202 comprises the antenna 452, the transmitting device 454, and the transmitting processor 468 in FIG. 4 of the present application.

### Embodiment 13

Embodiment 13 illustrates a structural block diagram of a processing apparatus used in a second node according to one embodiment of the present application, as shown in FIG. 13. In FIG. 13, a processing apparatus 1300 in the second node comprises a second transmitter 1301.

The second transmitter 1301 sends first signaling and sends first DCI, wherein the first DCI is identified by a C-RNTI of a recipient of the first DCI in a first cell, the first DCI comprises a first bit block and a second bit block, the first bit block comprises at least one bit, the second bit block comprises at least one bit, and any bit comprised in the second bit block does not belong to the first bit block;
in Embodiment 13, in response to the reception of the first DCI by the recipient of the first DCI, a first Preamble is sent by the recipient of the first DCI on a first air interface resource; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, the second receiver 1302 receives a second Preamble.

As one embodiment, the second Preamble is received by a third node.

As one embodiment, the second transmitter 1301 sends a first RRC message, the first RRC message being used for configuring at least one Preamble and at least one reference signal resource of a second cell, and the at least one Preamble being associated with the at least one reference signal resource,
wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

As one embodiment, the first reference signal resource is one reference signal resource having the highest RSRP among the at least one reference signal resource.

As one embodiment, the first reference signal resource is any reference signal resource among the at least one reference signal resource.

As one embodiment, when the cell associated with the first Preamble does not comprise the first cell, the first bit block indicates a first index; the first index indicates at least the former of the first reference signal resource and the first Preamble; and the first RRC message is used for determining the first index.

As one embodiment, when the cell associated with the first Preamble does not comprise the first cell, the first bit block is used for determining at least one of sending power of the first Preamble or whether to monitor a response to the first Preamble.

As one embodiment, when the cell associated with the first Preamble does not comprise the first cell, the first bit block is reserved.

As one embodiment, the processing apparatus 1300 in the second node comprises the second transmitter 1301 and a second receiver 1302.

As one embodiment, the second transmitter 1301 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1301 comprises the antenna 420, the transmitting device 418, the multi-antenna transmitting processor 471, and the transmitting processor 416 in FIG. 4 of the present application.

As one embodiment, the second transmitter 1301 comprises the antenna 420, the transmitting device 418, and the transmitting processor 416 in FIG. 4 of the present application.

As one embodiment, the second receiver 1302 comprises the antenna 420, a receiving device 418, a multi-antenna receiving processor 472, a receiving processor 470, the controller/processor 475, and the memory 476 in FIG. 4 of the present application.

As one embodiment, the second receiver 1302 comprises the antenna 420, the receiving device 418, the multi-antenna receiving processor 472, and the receiving processor 470 in FIG. 4 of the present application.

As one embodiment, the second receiver 1302 comprises the antenna 420, the receiving device 418, and the receiving processor 470 in FIG. 4 of the present application.

### Embodiment 14

Embodiment 14 illustrates a structural block diagram of a processing apparatus used in a third node according to one embodiment of the present application, as shown in FIG. 14. In FIG. 14, a processing apparatus 1400 in the third node comprises a third receiver 1402.

The third receiver 1402 receives a first Preamble on a first air interface resource;
in Embodiment 14, first signaling is received by a sender of the first Preamble and first DCI is received by the sender of the first Preamble, the first DCI is identified by a C-RNTI of the sender of the first Preamble in a first cell, the first DCI comprises a first bit block and a second bit block, the first bit block comprises at least one bit, the second bit block comprises at least one bit, and any bit comprised in the second bit block does not belong to the first bit block; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

As one embodiment, a first RRC message is received by the sender of the first Preamble, the first RRC message being used for configuring at least one Preamble and at least one reference signal resource of a second cell, and the at least one Preamble being associated with the at least one reference signal resource, wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

As one embodiment, the first reference signal resource is one reference signal resource having the highest RSRP among the at least one reference signal resource.

As one embodiment, the first reference signal resource is any reference signal resource among the at least one reference signal resource.

As one embodiment, when the cell associated with the first Preamble does not comprise the first cell, the first bit block indicates a first index; the first index indicates at least the former of the first reference signal resource and the first Preamble; and the first RRC message is used for determining the first index.

As one embodiment, when the cell associated with the first Preamble does not comprise the first cell, the first bit block is used for determining at least one of sending power of the first Preamble or whether to monitor a response to the first Preamble.

As one embodiment, when the cell associated with the first Preamble does not comprise the first cell, the first bit block is reserved.

As one embodiment, the processing apparatus 1400 in a second node comprises a second transmitter 1401 and a second receiver 1402.

As one embodiment, the second transmitter 1401 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1401 comprises the antenna 420, the transmitting device 418, the multi-antenna transmitting processor 471, and the transmitting processor 416 in FIG. 4 of the present application.

As one embodiment, the second transmitter 1401 comprises the antenna 420, the transmitting device 418, and the transmitting processor 416 in FIG. 4 of the present application.

As one embodiment, the second receiver 1402 comprises the antenna 420, a receiving device 418, a multi-antenna receiving processor 472, a receiving processor 470, the controller/processor 475, and the memory 476 in FIG. 4 of the present application.

As one embodiment, the second receiver 1402 comprises the antenna 420, the receiving device 418, the multi-antenna receiving processor 472, and the receiving processor 470 in FIG. 4 of the present application.

As one embodiment, the second receiver 1402 comprises the antenna 420, the receiving device 418, and the receiving processor 470 in FIG. 4 of the present application.

Those skilled in the art can understand that all or parts of the steps in the above method can be completed by instructing the relevant hardware by a program, and the program can be stored in a computer-readable storage medium, such as a read-only memory, a hard disk or an optical disk. Optionally, all or parts of the steps in the above embodiments can also be implemented by using one or more integrated circuits. Correspondingly, each module unit in the above embodiments can be implemented in the form of hardware or in the form of a software function module. The present application is not limited to any specific form of combinations of software and hardware. The user equipment, terminals and UE in the present application include but are not limited to drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macro cellular base stations, micro cellular base stations, Femtocells, relay base stations, gNBs (NR nodes B), TRPs (Transmitter Receiver Points) and other wireless communication devices.

The above is only a preferred embodiment of the present application and is not used for limiting the scope of protection of the present application. Any modifications, equivalent substitutions, improvements and the like made within the spirit and principles of the present invention shall be comprised within the scope of protection of the present invention.

## Claims

1. A first node for wireless communication, **characterized in that** it comprises:
a first receiver receiving first signaling and receiving first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and
a first transmitter, in response to the reception of the first DCI, sending a first Preamble on a first air interface resource,
wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

2. The first node according to claim 1, **characterized in that** it comprises:
the first receiver receiving a first RRC message, the first RRC message being used for configuring at least one Preamble and at least one reference signal resource of a second cell, and the at least one Preamble being associated with the at least one reference signal resource,
wherein the first Preamble is one Preamble among the at least one Preamble; a first reference signal resource is one reference signal resource among the at least one reference signal resource; the first air interface resource comprises the first reference signal resource; the second bit block indicates that the cell associated with the first Preamble is the second cell; and the cell associated with the first Preamble does not comprise the first cell.

3. The first node according to claim 2, **characterized in that** the first reference signal resource is one reference signal resource having the highest RSRP among the at least one reference signal resource.

4. The first node according to claim 2, **characterized in that** the first reference signal resource is any reference signal resource among the at least one reference signal resource.

5. The first node according to claim 2, **characterized in that** when the cell associated with the first Preamble does not comprise the first cell, the first bit block indicates a first index; the first index indicates at least the former of the first reference signal resource and the first Preamble; and the first RRC message is used for determining the first index.

6. The first node according to any one of claims 1 to 4, **characterized in that** when the cell associated with the first Preamble does not comprise the first cell, the first bit block is used for determining at least one of sending power of the first Preamble or whether to monitor a response to the first Preamble.

7. The first node according to any one of claims 1 to 4, **characterized in that** when the cell associated with the first Preamble does not comprises the first cell, the first bit block is reserved.

8. A second node for wireless communication, **characterized in that** it comprises:
a second transmitter sending first signaling and sending first DCI, wherein the first DCI is identified by a C-RNTI of a recipient of the first DCI in a first cell, the first DCI comprises a first bit block and a second bit block, the first bit block comprises at least one bit, the second bit block comprises at least one bit, and any bit comprised in the second bit block does not belong to the first bit block,
wherein in response to the reception of the first DCI by the recipient of the first DCI, the first Preamble is sent by the recipient of the first DCI on a first air interface resource; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

9. A method used in a first node for wireless communication, **characterized in that** it comprises:
receiving first signaling and receiving first DCI, wherein the first DCI is identified by a C-RNTI of the first node in a first cell, the first DCI comprises a first bit block and a second bit block, the first bit block comprises at least one bit, the second bit block comprises at least one bit, and any bit comprised in the second bit block does not belong to the first bit block; and
in response to the reception of the first DCI, sending a first Preamble on a first air interface resource,
wherein the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.

10. A third node for wireless communication, **characterized in that** it comprises:
a third receiver receiving a first Preamble on a first air interface resource,
wherein first signaling is received by a sender of the first Preamble and first DCI is received by the sender of the first Preamble, the first DCI is identified by a C-RNTI of the sender of the first Preamble in a first cell, the first DCI comprises a first bit block and a second bit block, the first bit block comprises at least one bit, the second bit block comprises at least one bit, and any bit comprised in the second bit block does not belong to the first bit block; the first signaling is used for determining whether the second bit block indicates a cell associated with the first Preamble; the interpretation of the first bit block depends on whether the cell associated with the first Preamble comprises the first cell; and when the cell associated with the first Preamble comprises the first cell, the first bit block is used for determining the first air interface resource.
